# EUROPÄISCHE PATENTSCHRIFT

(11) **EP 3 175 231 B1**
(45) Veröffentlichungstag und Bekanntmachung des Hinweises auf die Patenterteilung: **28.06.2023**
(21) Anmeldenummer: 15732411.2
(22) Anmeldetag: 28.05.2015
(51) Int. Cl.: G01N 30/44, G01N 30/46, B01D 15/18, B01D 15/24

(54) **ZWISCHENSPEICHERN VON PROBENABSCHNITTEN ZUR ARTEFAKTUNTERDRÜCKENDEN FLUIDVERARBEITUNG**
TEMPORARY STORAGE OF SAMPLE PORTIONS FOR ARTEFACT-PREVENTING FLUID PROCESSING
STOCKAGE TEMPORAIRE DE PORTIONS D'ÉCHANTILLONS POUR LE TRAITEMENT FLUIDIQUE AVEC SUPPRESSION D'ARTEFACTS

(30) Priorität: 31.07.2014 DE 102014110865
(43) Veröffentlichungstag der Anmeldung: 07.06.2017
(73) Patentinhaber: Agilent Technologies, Inc., Santa Clara, CA 95051 (US)
(72) Erfinder: SHOYKHET, Konstantin, 76337 Waldbronn (DE); WITT, Klaus, 76337 Waldbronn (DE); ANDERER, Herbert, 76337 Waldbronn (DE); BUCKENMAIER, Stephan, 76337 Waldbronn (DE)
(74) Vertreter: Dilg, Haeusler, Schindelmann Patentanwaltsgesellschaft mbH
(86) Internationale Anmeldenummer: PCT/IB2015/054003
(87) Internationale Veröffentlichungsnummer: WO 2016/016740

(56) Entgegenhaltungen:
- US-A- 4 158 630
- US-A1- 2007 134 808
- US-A1- 2012 240 666
- US-A1- 2013 134 095
- GROSKREUTZ STEPHEN R ET AL: "Selective comprehensive multi-dimensional separation for resolution enhancement in high performance liquid chromatography. Part I: Principles and instrumentation", JOURNAL OF CHROMATOGRAPHY, Bd. 1228, 17. Januar 2011 (2011-01-17), - 9. März 2012 (2012-03-09), Seiten 31-40, XP028895849, ISSN: 0021-9673, DOI: 10.1016/J.CHROMA.2011.06.035 in der Anmeldung erwähnt
- KELLY ZHANG ET AL: "Analysis of pharmaceutical impurities using multi-heartcutting 2D LC coupled with UV-charged aerosol MS detection", JOURNAL OF SEPARATION SCIENCE, 31. Juli 2013 (2013-07-31), - September 2001 (2001-09), Seiten n/a-n/a, XP055210221, ISSN: 1615-9306, DOI: 10.1002/jssc.201300493
- ELLIOT D. LARSON ET AL: "Development of selective comprehensive two-dimensional liquid chromatography with parallel first-dimension sampling and second-dimension separation-application to the quantitative analysis of furanocoumarins in apiaceous vegetables", ANALYTICAL AND BIOANALYTICAL CHEMISTRY, Bd. 405, Nr. 13, 16. Februar 2013 (2013-02-16), Seiten 4639-4653, XP055209717, ISSN: 1618-2642, DOI: 10.1007/s00216-013-6758-8

## Beschreibung

### TECHNISCHER HINTERGRUND

Die vorliegende Erfindung betrifft Verfahren und Fluidverarbeitungsvorrichtungen zum Verarbeiten von mittels einer Probenquelle bereitgestellten aufeinanderfolgenden fluidischen Probenabschnitten, sowie eine Anordnung zum Verarbeiten einer fluidischen Probe.

In einer HPLC wird typischerweise eine Flüssigkeit (mobile Phase) bei einer sehr genau kontrollierten Flussrate (zum Beispiel im Bereich von Mikrolitern bis Millilitern pro Minute) und bei einem hohen Druck (typischerweise 20 bis 1000 bar und darüber hinausgehend, derzeit bis zu 2000 bar), bei dem die Kompressibilität der Flüssigkeit spürbar sein kann, durch ein Adsorptionsmedium, eine sogenannte stationäre Phase (zum Beispiel in einer chromatografischen Säule), bewegt, um einzelne Komponenten einer in die mobile Phase eingebrachten Probenflüssigkeit voneinander zu trennen. Ein solches HPLC-System ist bekannt zum Beispiel aus der EP 0,309,596 B1 derselben Anmelderin, Agilent Technologies, Inc.

Bei einer eindimensionalen Chromatographie kann es vorkommen, dass von den zu trennenden Substanzen zwei oder mehrere verschiedene gleich oder annähernd gleich schnell vorankommen und somit an derselben oder an annähernd derselben Stelle in einem Chromatogramm zu finden sind. Zu ihrer weiteren Auftrennung kann zweidimensionale Chromatographie eingesetzt werden, bei der in einem zweiten Arbeitsgang eventuell andere Trennbedingungen wie andere stationäre Phase und/oder eine andere mobile Phase zur erneuten Chromatographie von Fraktionen aus der ersten Trennung verwendet werden, so dass sich die nach dem ersten Arbeitsgang schwer unterscheidbaren Substanzen nun ebenfalls voneinander trennen lassen.

In der zweidimensionalen Flüssigkeitschromatographie kann ein Lauf in einer zweiten Dimension (entsprechend einer zweiten Trennstufe) gestartet werden, nachdem eine Fraktion in einem Probenabschnitt der zu trennenden fluidischen Probe in der ersten Dimension (entsprechend einer ersten Trennstufe) detektiert oder im Ansatz erkannt worden ist. Falls eine andere Fraktion in einem anderen Probenabschnitt der zu trennenden fluidischen Probe in der ersten Trennstufe detektiert wird, während eine vorangehende Fraktion in der zweiten Trennstufe noch analysiert wird, kann diese weitere Fraktion zwischengespeichert werden. Ein herkömmlicher Ansatz besteht im Zwischenspeichern des Volumens der Fraktion (d.h. des zugehörigen Probentrennabschnitts) in einem von mehreren Flüssigkeitsbehältern wie zum Beispiel Kapillaren zwischen Fluidanschlüssen eines fluidischen Ventils, wobei das zum Beispiel einer weiteren Fraktion zugehörige Probenvolumen mittels Schaltens des Flusspfads in eine andere Ventilposition in eine solche Kapillare zur Zwischenspeicherung geführt wird. Typischerweise werden zwei mit dem fluidischen Ventil verbundene Kapillaren zur Zwischenspeicherung verwendet, um ein Zwischenspeichern ununterbrochen, d.h. ohne Verlust der kontinuierlich geförderten Probenflüssigkeit, zu ermöglichen. Sobald die Analyse in der zweiten Dimension erfolgt ist, wird die Kapillare mit dem nächsten zwischengespeicherten Probenabschnitt (zum Beispiel mit einer nächsten Fraktion) in den Flusspfad der zweiten Dimension eingebracht, und eine neue Trennung in der zweiten Dimension gestartet.

Stand der Technik ist in US 3,744,219, US 4,158,630, US 5,117,109, US 2013/134095 A1, US 4 158 630 A, Kelly Zhang et al, "Analysis of pharmaceutical impurities using multi-heartcutting 2D LC coupled with UV-charged aerosol MS detection", Journal of Separation Science 31, 2013, und

Groskreutz, S., Swenson M., Secor, L., Stoll D. "Selective comprehensive multidimensional separation for resolution enhancement in high performance liquid chromatography. Part I: principles and instrumentation", J Chromatogr A, 2012, 1228:31-40 offenbart.

Beim Überführen von Probenabschnitten aus der ersten Trennstufe in die zweite Trennstufe besteht die Gefahr einer unerwünschten Probenverschleppung. Dies kann zu Artefakten in dem resultierenden Chromatogramm und somit zu einer Verschlechterung der Detektionsgenauigkeit führen.

### OFFENBARUNG

Es ist eine Aufgabe der Erfindung, von einer Probenquelle bereitgestellte aufeinanderfolgende Probenabschnitte so zu handhaben, dass diese nachfolgend artefaktarm oder sogar artefaktfrei weiterverarbeitbar sind. Die Aufgabe wird mittels der unabhängigen Ansprüche gelöst. Weitere Ausführungsbeispiele sind in den abhängigen Ansprüchen gezeigt.

Gemäß einem exemplarischen Ausführungsbeispiel der vorliegenden Erfindung ist eine Fluidverarbeitungsvorrichtung (die als Standalone-Gerät oder als Teil einer größeren Anordnung ausgebildet sein kann) zum Verarbeiten von mittels einer Probenquelle bereitgestellten (insbesondere direkt) aufeinanderfolgenden fluidischen Probenabschnitten bereitgestellt, wobei die Fluidverarbeitungsvorrichtung eine Mehrzahl von Probenaufnahmevolumina, die zum aufeinanderfolgenden zwischenzeitlichen Befüllen mit mindestens einem jeweiligen der Probenabschnitte eingerichtet sind, und eine Steuereinrichtung (zum Beispiel ausgebildet als Prozessor, der in entsprechender Weise programmtechnisch eingerichtet sein kann) aufweist, die zum derartigen aufeinanderfolgenden Entleeren der Probenabschnitte aus den Probenaufnahmevolumina eingerichtet ist, dass vermieden (insbesondere verunmöglicht) ist oder wird, dass zwei jeweilige der Probenabschnitte beim Entleeren miteinander in (insbesondere direkten bzw. eine Mischung auslösenden) Kontakt gebracht werden, welche die Probenquelle nicht unmittelbar benachbart (d.h. am Auslass der Probenquelle nicht direkt aneinander angrenzten) verlassen haben.

Gemäß einem anderen exemplarischen Ausführungsbeispiel der vorliegenden Erfindung ist ein Verfahren zum Verarbeiten von mittels einer Probenquelle bereitgestellten aufeinanderfolgenden fluidischen Probenabschnitten geschaffen, wobei bei dem Verfahren Probenaufnahmevolumina mit mindestens einem jeweiligen der Probenabschnitte aufeinanderfolgend zwischenzeitlich befüllt werden, und die Probenabschnitte aus den Probenaufnahmevolumina derart aufeinanderfolgend entleert werden, dass vermieden ist oder wird, dass zwei jeweilige der Probenabschnitte beim Entleeren miteinander in Kontakt gebracht werden, welche die Probenquelle nicht unmittelbar benachbart verlassen haben.

Gemäß noch einem anderen exemplarischen Ausführungsbeispiel ist eine Fluidverarbeitungsvorrichtung (die als Standalone-Gerät oder als Teil einer größeren Anordnung ausgebildet sein kann) zum Verarbeiten von mittels einer Probenquelle bereitgestellten (insbesondere direkt) aufeinanderfolgenden fluidischen Probenabschnitten bereitgestellt, wobei die Fluidverarbeitungsvorrichtung eine Mehrzahl von Probenaufnahmevolumina, die zum aufeinanderfolgenden zwischenzeitlichen Befüllen mit mindestens einem jeweiligen der Probenabschnitte eingerichtet sind, eine Steuereinrichtung (zum Beispiel ausgebildet als Prozessor, der in entsprechender Weise programmtechnisch eingerichtet sein kann), die zum aufeinanderfolgenden Entleeren der Probenabschnitte aus den Probenaufnahmevolumina eingerichtet ist, und eine Zuordnungseinrichtung (zum Beispiel ausgebildet als weiterer Prozessor oder Teil eines die Steuereinrichtung beinhaltenden Prozessors, der in beiden Fällen in entsprechender Weise programmtechnisch eingerichtet sein kann) aufweist, die zum Zuordnen von Zuordnungsinformation (insbesondere ein Datensatz, der einem Teil oder jedem der Probenabschnitte Daten zuordnet, die dessen Verarbeitungshistorie vor dem Einfüllen in ein jeweiliges Probenaufnahmevolumen und/oder nach dem Entleeren aus dem jeweiligen Probenaufnahmevolumen beschreibt, weiter insbesondere in Form von einem oder mehreren Zeitstempeln) zu zumindest einen Teil der Probenabschnitte eingerichtet ist, wobei die Zuordnungsinformation indikativ für einen (insbesondere zeitlichen) Rang des jeweiligen Probenabschnitts in einer (insbesondere zeitlichen) Rangfolge des Befüllens der Probenaufnahmevolumina mit den Probenabschnitten und/oder in einer (insbesondere zeitlichen) Rangfolge des Entleerens der Probenabschnitte aus den Probenaufnahmevolumina ist (insbesondere kann die Zuordnungsinformation indikativ für eine Position des jeweiligen Probenabschnitts in einer Reihenfolge des Befüllens und/oder Entleerens der Probenabschnitte sein, welche Entleer-Reihenfolge von einer Befüll-Reihenfolge abweicht, gemäß welcher die Probenaufnahmevolumina mit den Probenabschnitten befüllt worden sind), wobei die Steuereinrichtung zum Steuern einer Weiterverarbeitung der Probenabschnitte basierend auf der Zuordnungsinformation eingerichtet ist (insbesondere die Zuordnungsinformation verwendet wird, um die Weiterverarbeitung basierend darauf anzupassen, weiter insbesondere eine Rückskalierung eines Drifting-Gradienten auf einen Ursprung eines jeweiligen zwischengespeicherten Probenabschnitts durchgeführt wird).

Gemäß noch einem anderen exemplarischen Ausführungsbeispiel ist ein Verfahren zum Verarbeiten von mittels einer Probenquelle bereitgestellten aufeinanderfolgenden fluidischen Probenabschnitten bereitgestellt, wobei bei dem Verfahren Probenaufnahmevolumina mit mindestens einem jeweiligen der Probenabschnitte aufeinanderfolgend zwischenzeitlich befüllt werden, die Probenabschnitte aus den Probenaufnahmevolumina aufeinanderfolgend entleert werden, Zuordnungsinformation zu zumindest einen Teil der Probenabschnitte zugeordnet wird, wobei die Zuordnungsinformation indikativ für einen Rang des jeweiligen Probenabschnitts in einer Rangfolge des Befüllens der Probenaufnahmevolumina mit den Probenabschnitten und/oder in einer Rangfolge des Entleerens der Probenabschnitte aus den Probenaufnahmevolumina ist, und eine Weiterverarbeitung der Probenabschnitte basierend auf der Zuordnungsinformation gesteuert wird.

Gemäß einem weiteren exemplarischen Ausführungsbeispiel der vorliegenden Erfindung ist eine Anordnung zum Verarbeiten einer fluidischen Probe bereitgestellt, wobei die Anordnung eine Probenquelle zum Bereitstellen von aufeinanderfolgenden fluidischen Probenabschnitten der fluidischen Probe und mindestens eine der Fluidverarbeitungsvorrichtungen mit den oben beschriebenen Merkmalen zum Verarbeiten der mittels der Probenquelle bereitgestellten aufeinanderfolgenden fluidischen Probenabschnitte aufweist.

Im Rahmen dieser Beschreibung wird unter dem Begriff "fluidische Probe" insbesondere eine flüssige und/oder gasförmige Probe, optional mit Festkörperbestandteilen, verstanden.

Im Rahmen dieser Beschreibung wird unter dem Begriff "Probenabschnitt" insbesondere ein räumlich zusammenhängender Abschnitt eines Gesamtvolumens der fluidischen Probe verstanden. Zum Beispiel kann die (insbesondere zu trennende) fluidische Probe entlang einer Fluidleitung (wie zum Beispiel einer Kapillare) fließen und dabei in eine Abfolge aufeinanderfolgender Probenabschnitte aufgeteilt werden. Die einzelnen Probenabschnitte werden dann abschnittsweise oder paketweise durch einen Fluidschalter (zum Beispiel realisiert durch ein oder mehrere Fluidventile) in die Fluidverarbeitungsvorrichtung überführt, so dass zu jedem Zeitpunkt zum Beispiel jeweils nur ein Teil (insbesondere nur ein einziger) der Probenabschnitte in der Fluidverarbeitungsvorrichtung zur Weiterverarbeitung (insbesondere zur Trennung oder weiteren Trennung) befindlich ist, dagegen aber mehrere Probenabschnitte in der Probenquelle (zum Beispiel einer vorgelagerten Trennstufe) befindlich sein können und dort vorverarbeitet (insbesondere aufgetrennt) werden können bzw. auf die Weiterverarbeitung in der Fluidverarbeitungsvorrichtung warten.

Gemäß einem exemplarischen Ausführungsbeispiel können beim Überführen von aufeinanderfolgenden Probenabschnitten von einer Probenquelle zu einer fluidischen Weiterverarbeitung die Probenabschnitte zunächst in Probenaufnahmevolumina zwischengespeichert werden und die zwischengespeicherten Probenabschnitte nachfolgend einzeln und entsprechend einer vorgebbaren Reihenfolge der Weiterverarbeitung zugeführt werden. Die Auswahl der Reihenfolge des Entleerens der zwischengespeicherten Probenabschnitte aus den Probenaufnahmevolumina erfolgt vorzugsweise unter Einhaltung der Bedingung, dass unterbunden ist, dass zwei in der Entleersequenz direkt aufeinanderfolgende Probenabschnitte beim Bereitstellen am Ausgang der Probenquelle nicht unmittelbar zueinander benachbart waren. Dadurch kann es selbst beim Auftreten unerwünschter Restprobenmengen in Zu- und/oder Ableitungen (insbesondere zwischen Übergabeventilen bzw. innerhalb eines solchen Übergabeventils) allenfalls zu einer quantitativen, nicht aber zu einer qualitativen Störung der Weiterverarbeitung kommen. Dies liegt daran, dass die von der Probenquelle bereitgestellten Probenabschnitte (insbesondere in einer ersten Chromatographie-Trennstufe getrennte Probenabschnitte) bei räumlicher Nähe häufig auch einen engen inhaltlichen Bezug zueinander aufweisen (insbesondere ähnliche Retentionszeiten aufweisen). Daher kommt es bei einer Verunreinigung eines Probenabschnitts mit Fluid eines in der Probenquelle direkt benachbarten Probenabschnitts allenfalls zu geringfügigeren Störungen hinsichtlich der Intensität einzelner Probenfraktionen (zum Beispiel zu geringfügigen quantitativen Störungen einer Peakhöhe oder Peakfläche in einem Chromatogramm). Wenn dagegen ein Probenabschnitt der Probequelle durch Probenreste eines probenquellenseitig entfernteren Probenabschnitts in den Zu- oder Ableitungen verunreinigt wird, wobei diese beiden Probenabschnitte in der Probenquelle (insbesondere infolge stark unterschiedlicher fluidischer oder chemischer Eigenschaften) weit voneinander entfernt waren (insbesondere stark unterschiedliche Retentionszeiten aufweisen), so kann es in dem dadurch verunreinigten Probenabschnitt zu einer oder mehreren zusätzlichen artifiziellen Fraktionen kommen (zum Beispiel zu mindestens einem zusätzlichen artifiziellen Peak in einem Chromatogramm). Anders ausgedrückt kann es durch die beschriebenen und ähnliche Effekte zu höchst unerwünschten qualitativen Artefakten kommen. Durch das Vermeiden einer ungewollten Vermischung, eines ungewollten in Verbindung Bringens oder einer ungewollten gemeinsamen Weiterverarbeitung von Probenabschnitten mit unverwandter Verarbeitungshistorie kann mit hoher Wahrscheinlichkeit vermieden werden, dass im Messspektrum eines Probenpakets Stoffe erkennbar werden, die eigentlich/ursächlich auf einer Fehlmessung beruhen. Anders ausgedrückt kann erreicht werden, dass Restfluid in Zwischenleitungen keine fremden Substanzen enthält, die nicht von zu einem gegenwärtig gehandhabten Probenabschnitt bzw. Fluidpaket ursprünglich unmittelbar benachbarten (vorangehenden bzw. nachfolgenden) Probenabschnitten bzw. Fluidpaketen stammen. Dadurch können Probenverschleppung und Detektionsartefakte stark unterdrückt oder sogar ganz vermieden werden. Hierzu kann vorzugsweise ein Inkontaktbringen von zwei Probenabschnitten verunmöglicht werden, die nicht unmittelbar benachbart die Probenquelle verlassen haben.

Gemäß einem alternativen oder ergänzenden Ausführungsbeispiel kann beim aufeinanderfolgenden Befüllen von Probenaufnahmevolumina mit Probenabschnitten und dem nachfolgenden Entleeren der mit den Probenabschnitten befüllten Probenaufnahmevolumina entsprechend einer vorgebbaren Reihenfolge (die zum Beispiel zum Unterdrücken oder Eliminieren der zuvor beschriebenen Artefakte ausgewählt sein kann) ein Teil oder jeder der Probenabschnitte mit einer Zuordnungsinformation (zum Beispiel ein für die Position des jeweiligen Probenabschnitts in der Befüllsequenz und/oder in der Entleersequenz indikativer Datenstempel) versehen werden. Zum Beispiel bei einem Umordnen der Probenabschnitte zwischen dem Befüllen und dem Entleeren kann dadurch sichergestellt werden, dass die Weiterbehandlung der Probenabschnitte (zum Beispiel eine sekundäre Trennung der bereits in Fraktionen getrennten Probenabschnitte in einer zweiten Chromatographie-Trennstufe, in der die Fraktionen in Teilfraktionen weitergetrennt werden) unter Berücksichtigung der ursprünglichen Position eines jeweiligen Probenabschnitts in der von der Probenquelle bereitgestellten Sequenz von Probenabschnitten durchgeführt wird. Wenn beispielsweise durch die Probenquelle die Probenabschnitte nach einer ersten Chromatographie-Trennstufe bereitgestellt werden und nach Zwischenspeichern in den Probenaufnahmevolumina die Probenbestandteile in den Probenabschnitten einer zweiten Chromatographie-Trennung, insbesondere quasi im Rückwärtsbetrieb, zugeführt werden, ist zum Erhalten eines korrekten Chromatogramms eine Umordnung einzelner Messbereiche entsprechend der in umgeordneter Reihenfolge der sekundären Chromatographie-Trennung zugeführten Probenabschnitte durchzuführen. Um also Messdaten sinnvoll auswerten zu können bzw. ein wahrheitsgemäßes Messspektrum rückrechnen zu können, kann als Zuordnungsinformation den fortlaufenden Messdaten ein zusätzlicher Datenstempel aufgeprägt werden, der anzeigt, welche Zwischenspeicher-Historie ein zwischenzeitlich zwischengespeicherter Probenabschnitt hat bzw. an welcher Position dieser Probenabschnitt sich beim Verlassen der Probenquelle und beim Entleeren befunden hat. Für das Beispiel einer Flüssigchromatographiemessung in einer ersten Dimension und einer zweiten Dimension kann dieser Datenstempel bzw. die Zuordnungsinformation die Zugehörigkeit von Peaks in einer zweiten Dimension zu einem bestimmten Probenabschnitt (und damit zugehörigen Peaks) in der ersten Dimension beinhalten, zusammengenommen also insbesondere die Koordinaten in einem (mindestens) zwei-dimensionalen Feld. Der Ursprung des Handlings der Probenabschnitte ist die Befüll-Reihenfolge, die aber durch zwischenzeitliches Zwischenspeichern, Puffer oder Parken verloren gegangen sein kann. Dieser Umstand soll restaurierbar aus den Daten bzw. der Zuordnungsinformation hervorgehen. Die Zuordnungsinformation kann eine Position eines Probenabschnitts an der Quelle als aussagekräftige Information enthalten, wohingegen die Rangfolge des Entleerens aus dem fortlaufenden Datenstrom erkannt werden kann. Umgekehrt kann aber auch jedem Probenabschnitt in der Reihenfolge der Probenquelle schon die Zuordnungsinformation aufgeprägt werden, an welcher Stelle in der Reihenfolge des Entleerens der jeweilige Probenabschnitt später stehen wird.

Im Weiteren werden zusätzliche Ausgestaltungen der Fluidverarbeitungsvorrichtungen, der Anordnung und der Verfahren beschrieben.

Die oben beschriebene Vermeidung des Inkontaktbringens von probenquellenseitig nicht unmittelbar benachbarten Probenabschnitten ist gemäß einem Ausführungsbeispiel für solche etwaige probenfreie Fluidabschnitte entbehrlich, die nur mobile Phase enthalten. Mit anderen Worten ist es nicht erforderlich, einen ehemaligen hinreichend sauberen und gewollten fluidischen Inhalt einer Loop wie beschrieben abschnittsweise getrennt zu halten. Eine Ausnahme stellt quasi ein Pre-Fill der Loops dar, der probenquellenseitig zwar auch nicht unmittelbar benachbart war, aber hier nicht stört, weil er zur mobilen Phase zählt.

In der Probenquelle kann eine fluidische Probe in Probenabschnitte getrennt werden, von denen jede keine, eine oder mehrere Fraktionen enthalten kann. Im Rahmen dieser Beschreibung wird unter dem Begriff "Fraktionen" insbesondere verstanden, dass die fluidische Probe in einzelne Gruppen von Substanzen aufgetrennt wird, wobei jede einzelne und zusammengehörige Substanzgruppe als Fraktion bezeichnet werden kann. Die Unterteilung der fluidischen Probe in die Fraktionen kann in einer (insbesondere ersten) Trennstufe basierend auf einem (insbesondere ersten) Trennkriterium erfolgen. Zum Beispiel können Probensubstanzen einer gemeinsamen Fraktion hinsichtlich einer physikalischen und/oder chemischen Eigenschaft ähnlich oder identisch sein. Eine solche Eigenschaft kann die Masse, das Volumen, ein Masse-Ladung-Verhältnis, eine elektrische Ladung, die Affinität zu einer stationären Phase (Säulenpackmaterial, Trennmedium, etc.) etc. sein.

In der Fluidverarbeitungsvorrichtung können in den Probenabschnitten enthaltene Fraktionen der fluidischen Probe in jeweils eine oder mehrere Teilfraktionen getrennt werden. Im Rahmen dieser Beschreibung werden unter dem Begriff "Teilfraktionen" insbesondere Untergruppen von Probensubstanzen einer gemeinsamen Fraktion verstanden. Mit anderen Worten kann die fluidische Probe in einer ersten Trennstufe zunächst in die Fraktionen aufgeteilt werden, und dann in einer zweiten Trennstufe zumindest eine Teil der Fraktionen in mehrere Teilfraktionen unterteilt werden. Die Unterteilung einer jeweiligen Fraktion in Teilfraktionen kann in der zweiten Trennstufe basierend auf einem zweiten Trennkriterium erfolgen, das zum Beispiel von dem ersten Trennkriterium unterschiedlich sein kann. Zum Beispiel können Probensubstanzen einer gemeinsamen Teilfraktion hinsichtlich einer physikalischen und/oder chemischen Eigenschaft ähnlich oder gar identisch sein. Eine solche Eigenschaft kann die Masse, das Volumen, ein Masse-Ladung-Verhältnis, eine elektrische Ladung, die Affinität zu einer stationären Phase (zum Beispiel Säulenpackmaterial, Trennmedium, etc.) etc. sein.

Ferner ist darauf hinzuweisen, dass der Anwendungsfall zweidimensionaler Flüssigkeitschromatographie, bei der eine erste Chromatographie-Trennung in der Probenquelle und eine zweite Chromatographie-Trennung nach dem Zwischenspeichern der Probenabschnitte in den Probenaufnahmevolumina erfolgt, nicht das einzige Ausführungsbeispiel der Erfindung ist. Ein anderes exemplarisches Anwendungsbeispiel bezieht sich auf eine Prozessbeobachtung, bei der die Probenabschnitte aus der Probenquelle zu einer beliebigen Probendestination gefördert werden sollen und, zum Beispiel aufgrund unterschiedlicher Verarbeitungsgeschwindigkeiten von fluidischer Probe in der Probenquelle einerseits und in der Probendestination andererseits, ein Zwischenspeichern der Probenabschnitte in den Probenaufnahmevolumina vorgenommen werden soll.

Gemäß einem Ausführungsbeispiel kann das aufeinanderfolgende Entleeren der Probenabschnitte aus den Probenaufnahmevolumina derart erfolgen, dass vermieden ist, dass Bestandteile einer zu einem gerade entleerten Probenabschnitt vor dem Befüllen nicht benachbarten Probenabschnitt in Zuleitungen verbleiben und den gerade entleerten Probenabschnitt verunreinigen, kontaminieren oder zu einer Probenverschleppung führen. Selbst wenn in unerwünschter, aber nicht stets vollständig vermeidbarer Weise historisches Probenmaterial in geringer Menge in Zuleitungen (zum Beispiel Kapillaren, Ventilnuten, etc.) verbleiben sollte, so kann beim Verunmöglichen einer Vermischung von ursprünglich in der Probenquelle nicht unmittelbar benachbarten Probenabschnitten zumindest ein besonders unerwünschtes Auftreten artifizieller Zusatzpeaks in einem Messspektrum (zum Beispiel einem Chromatogramm) vermieden werden. Derartige artifizielle Zusatzpeaks in der Fluidverarbeitungsvorrichtung sind umso wahrscheinlicher, je weniger stark die Historie von unerwünscht in Wechselwirkung geratende Probenabschnitte in der Probenquelle miteinander verknüpft sind, d.h. je weiter die sich später teils mischenden Probenabschnitte ursprünglich in der Probenquelle (insbesondere als Ergebnis einer ersten Chromatographie-Trennung) voneinander entfernt sind/waren.

Gemäß der Erfindung wird eine Reihenfolge des Befüllens der Probenaufnahmevolumina mit den Probenabschnitten und eine Reihenfolge des Entleerens der Probenabschnitte aus den Probenaufnahmevolumina derart aufeinander angepasst bzw. derart eingestellt, dass beim Übergang zwischen dem Befüllen und dem Entleeren zuerst das zuletzt befüllte Probenaufnahmevolumen entleert wird. Dadurch ist an der Schnittstelle zwischen Befüllen und Entleeren ein Sprung bzw. eine Unstetigkeit in der Handhabung von Probenabschnitten vermieden. Bei einem solchen Sprung würde das Entleeren mit einem Probenabschnitt beginnen, der nicht zuletzt in ein Probenaufnahmevolumen zum Zwischenspeichern eingefüllt worden ist. Wenn das Befüllen endet, sind die Zuleitungen möglicherweise noch mit einem zu dem zuletzt eingefüllten Probenabschnitt gehörigen Fluid gefüllt. Wenn das erste Entleeren dann mit dem gleichen Fluid beginnt, d.h. der zuletzt eingefüllte Probenabschnitt zuerst entleert wird, ist an der Schnittstelle zwischen Befüllen und Entleeren eine unerwünschte Probenverschleppung zwischen Probenabschnitten ohne engen räumlichen Bezug vermieden. Die einschlägigen Zuleitungen sind eine Hin- und eine Rückleitung. Mit der beschriebenen Maßnahme kann dafür gesorgt werden, dass lediglich die Hin-Zuleitung jetzt nur benachbarte Probenabschnitte enthält. Im Falle, dass die Rückleitung in Bezug auf eine Wechselwirkung mit einem gerade gehandhabten Probenabschnitt noch unerwünschtes Medium enthält, kann das zuletzt befüllte Probenaufnahmevolumen entleert werden und das Ergebnis gezielt verworfen werden. Eine ursprünglich in der Loop befindliche Matrix ist also kein Problem, auch wenn sie später in der Rückleitung ist.

Gemäß der Erfindung wird das Entleeren der Probenabschnitte aus dem Probenaufnahmevolumina in umgekehrter Reihenfolge zu einer Reihenfolge des Befüllens der Probenaufnahmevolumina mit den Probenabschnitten erfolgen. Dies kann als aktiver Vorgang angesehen werden, der das Vermeiden des oben beschriebenen Inkontaktgeratens der genannten Probenabschnitte bewerkstelligt. Diese Befüll- und Entleer-Logik kann als LIFO-Logik ("last in, first out") bezeichnet werden, gemäß welcher zunächst der zuletzt in ein Probenaufnahmevolumen eingefüllte Probenabschnitt entleert und der Weiterverarbeitung zugeführt wird, dann der als vorletzter zwischengespeicherte Probenabschnitt, usw. Als vorletzter wird der als zweiter in ein Probenaufnahmevolumen eingefüllte Probenabschnitt entleert, und ganz zum Schluss der zuerst in ein Probenaufnahmevolumen eingefüllte Probenabschnitt. Gemäß einem exemplarischen Ausführungsbeispiel wird ein solches LIFO-Prinzip in Reinform durchgeführt. Gemäß einem anderen exemplarischen Ausführungsbeispiel ist auch eine LIFO-Logik mit Modifikationen möglich. Zum Beispiel können, wenn ein zu entleerender Satz von Probenaufnahmevolumina teilgeleert ist und dann wieder vollständig befüllt wird, alle dann befüllten Probenaufnahmevolumina gemäß einer LIFO-Logik entleert werden.

Gemäß einem Ausführungsbeispiel können das Befüllen und das Entleeren der Probenaufnahmevolumen mittels Schaltens eines Fluidventils oder mehrerer (zum Beispiel zusammenwirkender oder synchronisierter) Fluidventile durchgeführt werden. Ein solches Fluidventil kann einen ersten Ventilkörper und einen zweiten Ventilkörper aufweisen, die zum Ausbilden unterschiedlicher Fluidkopplungszustände relativ zueinander bewegt (insbesondere longitudinal zueinander verschoben oder vorzugsweise relativ zueinander rotiert) werden können. Zum Beispiel kann der erste Ventilkörper (zum Beispiel ein Stator) eine Mehrzahl von Ports als Fluidanschlüsse zur fluidischen Ankopplung von fluidischen Bauteilen aufweisen. Der zweite Ventilkörper (zum Beispiel ein Rotor) kann eine Mehrzahl von Fluidleitungen (zum Beispiel Nuten) aufweisen, die durch die Relativbewegung zwischen den beiden Ventilkörpern in Fluidverbindung mit unterschiedlichen der Ports gebracht werden können, um einen jeweiligen Fluidkopplungszustand einstellen zu können. Eine Steuereinrichtung (zum Beispiel ein Prozessor) kann dem mindestens einen Fluidventil eine bestimmte Schaltlogik aufprägen, mit der das Befüllen und Entleeren der mit dem mindestens einen Fluidventil fluidisch gekoppelten Probenaufnahmevolumina in gewünschter Weise eingestellt werden kann, um Probenverschleppung zu vermeiden. Als Fluidventile können Schieberventile eingesetzt werden, alternativ oder ergänzend aber auch Fluidventile anderer Bauart.

Gemäß einem Ausführungsbeispiel kann zumindest ein Teil der Probenaufnahmevolumina als jeweiliges Fluidleitungsstück (zum Beispiel Kapillarstück) zwischen zwei jeweiligen Ports des Fluidventils eingerichtet sein. Zum Beispiel können zwei jeweilige der Ports durch ein Kapillarstück oder eine so genannte Probenschleife als Fluidleitungsstück miteinander fluidisch gekoppelt sein, wobei das Innenvolumen des Fluidleitungsstücks das zugeordnete Probenaufnahmevolumen bilden kann. Durch Vorsehen einer ausreichend großen Anzahl von Ports kann ein einziges Fluidventil eine beliebige Mehrzahl von Probenaufnahmevolumina bedienen und mittels Schaltens des Fluidventils zwischen der Probenquelle und einem Fluidweiterverarbeitungspfad zwischenspeichern bzw. anschaulich parken. Dies fördert eine kompakte Ausgestaltung. Um komplexe Schaltvorgänge auszuführen, können auch mehrere solche mittels der Steuereinrichtung schaltbare Parkventile vorgesehen sein, von denen jedes eine Anzahl von Probenaufnahmevolumina aufweisen kann.

Gemäß einem Ausführungsbeispiel kann das aufeinanderfolgende Entleeren der Probenabschnitte aus den Probenaufnahmevolumina derart erfolgen, dass eine in Fluidverbindung mit den Probenaufnahmevolumina bringbare Zuleitung mit einem Spülfluid gespült wird, um mittels Spülens der Zuleitungen vor dem nachfolgenden Entleeren die Zuleitungen zu reinigen. Ergänzend zum Einstellen der Befüll- bzw. Entleer-Reihenfolge ist es auch möglich, ein direktes Inkontaktbringen von in der Probenquelle nicht direkt zueinander benachbarten Probenabschnitten dadurch zu vermeiden, dass möglicherweise noch mit Resten von historischer fluidischer Probe versehene Zuleitungen bzw. Fluidleitungen vor dem Überführen eines nächsten, gegenwärtig in einem Probenaufnahmevolumen zwischengespeicherten Probenabschnitts zur fluidischen Weiterverarbeitung durch Spülen mit einem Spülfluid gereinigt werden. Anschaulich können Spülfluid-Pakete zwischen nacheinander entleerte Probenabschnitte zwischengeordnet werden, um deren Wechselwirkung miteinander zu vermeiden. Auch dadurch kann eine Probenverschleppung wirksam unterdrückt werden.

Gemäß einem Ausführungsbeispiel kann die Zuleitung mit einem von zu detektierender fluidischer Probe freiem Fluid eines in einem Probenaufnahmevolumen befindlichen Probenabschnitts als das Spülfluid gespült werden. Gemäß dieser bevorzugten Ausgestaltung muss kein separates Spülfluid (im Sinne einer speziell zum Spülen von extern bereitgestellten mobilen Phase) bereitgestellt werden, sondern es kann von der Kenntnis (die zum Beispiel aus einem Detektorsignal gewonnen werden kann) der Zusammensetzung der Fluidabschnitte am Ausgang der Probenquelle Gebrauch gemacht werden, um Bereiche von Fluid in einem gerade zwischengespeicherten Probenabschnitt zu identifizieren, die keine fluidischen Probe enthalten, sondern zum Beispiel lediglich Lösungsmittel beinhalten. Solche Bereiche eines Probenabschnitts können zum Spülen der Zuleitungen verwendet werden, ohne dass dadurch eine Probenverschleppung zu befürchten ist. Wenn zum Beispiel im Bereich des Ausgangs der Probenquelle ein Detektor vorgesehen ist, der die aufeinanderfolgenden Probenabschnitte auf das Vorhandensein von Detektionssignalen von fluidischer Probe hin abtastet, so können probenfreie Bereiche eines Probenabschnitts erkannt und für das nachfolgende Verwenden als Spülfluid vorgemerkt werden. Fehlmessungen aufgrund von Probenverschleppung können dadurch quasi ohne apparativen Zusatzaufwand unterdrückt werden.

Gemäß einem Ausführungsbeispiel kann die Zuleitung mit dem Spülfluid zeitlich zwischen dem Befüllen und dem Entleeren gespült werden. Indem das Spülen der Zuleitungen an der hinsichtlich Probenverschleppung besonders kritischen Schnittstelle zwischen Befüllen und Entleeren durchgeführt wird, verbleibt ein hohes Maß an Designfreiheit hinsichtlich der Auswahl einer Befüll- bzw. Entleer-Reihenfolge. Nicht erfindungsgemäß kann in diesem Fall auch ein Befüllen bzw. Entleeren gemäß einem FIFO-Prinzip ("first in, first out") durchgeführt werden, gemäß welcher zunächst der zuerst in ein Probenaufnahmevolumen eingefüllte Probenabschnitt entleert und der Weiterverarbeitung zugeführt wird, dann der als zweites zwischengespeicherte Probenabschnitt, usw. Als vorletzter wird der an vorletzter Stelle in ein Probenaufnahmevolumen eingefüllte Probenabschnitt entleert, und ganz zum Schluss der zuletzt in ein Probenaufnahmevolumen eingefüllte Probenabschnitt. Die Verwirklichung eines solchen FIFO-Prinzips hat den Vorteil, dass dadurch ein Umordnen von Bereichen eines Messspektrums entbehrlich ist, der bei Verwirklichung eines LIFO-Prinzips aufgrund der Adaptierung der Reihenfolge des Entleerens bevorzugt ist.

Gemäß einem Ausführungsbeispiel kann in der Probenquelle eine fluidische Probe in die Probenabschnitte getrennt werden. Aufgrund dieser Trennung der fluidischen Probe in die Probenabschnitte weisen dann benachbarte Probenabschnitte am Ausgang der Probenquelle zueinander eine engere Beziehung auf als räumlich weiter voneinander entfernte Probenabschnitte. Dann führt das Vermeiden einer Wechselwirkung von ursprünglich nicht unmittelbar zueinander benachbarten Probenabschnitten stromabwärts der Probenquelle im Rahmen des Zwischenspeicherns in den Probenaufnahmevolumina dazu, dass Probenabschnitte ohne engen Trennungsbezug miteinander nicht in Wirkverbindung geraten. Daraus resultierende Fehlmessungen können dann ausgeschlossen werden.

Gemäß einem Ausführungsbeispiel kann bei dem Verfahren ferner ein jeweils entleerter Probenabschnitt in dessen Komponenten getrennt werden, insbesondere chromatographisch getrennt werden, weiter insbesondere mittels Flüssigchromatographie getrennt werden. Somit kann eine erste Probentrennung in der Probenquelle und eine zweite Probentrennung (bzw. eine Weitertrennung) stromabwärts der Zwischenspeicherung durchgeführt werden und somit insgesamt ein zweidimensionales Probentrennverfahren durchgeführt werden. Insbesondere ist auf diese Weise eine zweidimensionale Flüssigchromatographietrennung ermöglicht, ohne dass es zu Fehlmessungen aufgrund des Anpassens der zweiten Dimension auf die erste Dimension kommt. Eine solche Anpassung zwischen der ersten Dimension und der zweiten Dimension kann zum Beispiel dadurch erforderlich werden, dass die zweite Dimension nur eine andere (insbesondere kleinere) Flussrate verarbeiten kann als die erste Dimension. Die Anpassung der Flussraten kann dann durch das Zwischenspeichern der Probenabschnitte in den Probenaufnahmevolumina erfolgen.

Gemäß einem Ausführungsbeispiel kann bei dem Verfahren ferner ein jeweils entleerter Probenabschnitt in einen fluidischen Pfad zwischen eine Fluidfördereinrichtung zum Fördern einer mobilen Phase und des Probenabschnitts und eine Probentrenneinrichtung zum Trennen des Probenabschnitts in Komponenten injiziert werden. Nach dem Zwischenspeichern kann ein jeweiliger Probenabschnitt also in einem (insbesondere weiteren) analytischen Pfad überführt werden, in dem dieser Probenabschnitts in mobiler Phase gefördert wird und zum Beispiel unter hohem Druck durch eine insbesondere chromatographische Probentrenneinrichtung getrennt wird.

Gemäß einem Ausführungsbeispiel kann das aufeinanderfolgende Entleeren der Probenabschnitte aus den Probenaufnahmevolumina derart erfolgen, dass aktiv vermieden wird, dass zwei jeweilige der Probenabschnitte beim Entleeren miteinander in Kontakt gebracht werden, welche die Probenquelle nicht unmittelbar benachbart verlassen haben. Im Unterschied zu einer rein passiven, zwangsgekoppelten Auslesung (zum Beispiel bei einer Festverschaltung, bei der einfach nur ein Probenabschnitt nach dem anderen erst eingefüllt und dann entleert wird), kann gemäß dem beschriebenen Ausführungsbeispiel ein Inkontaktbringen von am Auslass der Probenquelle nicht unmittelbar aufeinanderfolgenden Probenabschnitten aktiv, insbesondere aktiv-adaptiv, vermieden werden.

Gemäß einem Ausführungsbeispiel können zwei jeweilige der Probenabschnitte, welche die Probenquelle unmittelbar benachbart verlassen haben, an einem fluidischen Auslass der Probenquelle ohne dazwischen angeordnetes Medium (insbesondere ohne einen diese Probenabschnitte separierenden Fluidabschnitt) unmittelbar physisch aneinandergrenzen. Dagegen können zwei jeweilige der Probenabschnitte, welche die Probenquelle nicht unmittelbar benachbart verlassen haben, an einem fluidischen Auslass der Probenquelle zwischeneinander ein Medium (insbesondere einen diese Probenabschnitte separierenden Fluidabschnitt, beispielsweise in Form eines anderen der Probenabschnitte) aufweisen.

Gemäß einem Ausführungsbeispiel kann in der Probenquelle eine erste Trennung einer fluidischen Probe (in Fraktionen) und nach dem Entleeren der Probenabschnitte der fluidischen Probe eine zweite Trennung (in Teilfraktionen) durchgeführt werden. Bei einer solchen zweidimensionalen Probentrennung kann jede Fraktion bzw. Teilfraktion der fluidischen Probe und somit jeder Peak in einem zugehörigen Messspektrum (insbesondere einem Chromatogramm) durch eine Retentionszeit (oder ein Retentionsvolumen) in der ersten Dimension sowie durch eine Retentionszeit (oder ein Retentionsvolumen) in der zweiten Dimension gekennzeichnet werden.

Gemäß einem Ausführungsbeispiel kann das Steuern der Weiterverarbeitung der Probenabschnitte ein Steuern eines Trennens der Probenabschnitte in Fraktionen aufweisen. Die den einzelnen Probenabschnitten zugeordnete und ihre Verarbeitungshistorie wiedergebende Zuordnungsinformation kann somit dazu verwendet werden, die Trennung der einzelnen Probenabschnitte in Fraktionen korrekt durchzuführen und insbesondere das Ergebnis der Trennung zutreffend zu interpretieren. Durch ein Umordnen der Probenabschnitte nach dem Zwischenspeichern gegenüber den Verhältnissen vor dem Zwischenspeichern kann eine entsprechende Anpassung des Trennens erforderlich werden, die auf den jeweiligen Probenabschnitts bezogen sein kann. Insbesondere kann eine Trennung in der Probenquelle (d.h. eine Trennung einer ersten Stufe) bezüglich einer Trennung in einem Weiterverarbeitungspfad stromabwärts der Probenaufnahmevolumina (d.h. eine Trennung einer zweiten Stufe) synchronisiert werden.

Gemäß einem Ausführungsbeispiel kann das Steuern des Trennens ein Einstellen eines Gradienten einer Zusammensetzung einer mobilen Phase, die durch eine Probentrenneinrichtung mit daran adsorbierter fluidischer Probe eines jeweiligen Probenabschnitts gefördert wird, basierend auf der Zuordnungsinformation aufweisen. Bei einem chromatographischen Trennen werden Komponenten einer fluidischen Probe an einer Chromatographie-Trennsäule als Probentrenneinrichtung zunächst adsorbiert. Bei einem sogenannten Gradientenmodus werden dann durch Veränderung der Lösungsmittelzusammensetzung die einzelnen Fraktionen der fluidischen Probe von der Probentrenneinrichtung abgelöst. Wenn zum Vermeiden unerwünschter Probenverschleppung und resultierender chromatographischer Fehlmessungen durch das Auftreten artifizieller Peaks eine Umordnung der Probenabschnitte im Zusammenhang mit dem Zwischenspeichern und Weiterleiten der Probenabschnitte durchgeführt wird, so geht damit auch unter Umständen das Erfordernis einher, den Gradienten auf die umgeordneten Probenabschnitte hin anzupassen bzw. abschnittsweise umzuordnen.

Gemäß einem Ausführungsbeispiel kann das Steuern des Trennens ein Umordnen einer Reihenfolge von den einzelnen Probenabschnitten zugeordneten Detektionssignalen basierend auf der Zuordnungsinformation aufweisen. Werden also die Probenabschnitte im Zusammenhang mit dem Zwischenspeichern in den Probenaufnahmevolumina umgeordnet, um ein direktes Inkontaktbringen ursprünglich nicht unmittelbar benachbarter Probenabschnitte auszuschließen, so werden anschaulich auch Abschnitte in den Detektionssignalen (insbesondere einem Chromatogramm) umgeordnet, was zunächst zu einem artifiziellen Messspektrum führt. Durch ein Rückordnen des Messspektrums in dem Sinne, dass Bereiche des Messspektrums, die den umgeordneten Probenabschnitten entsprechen, in entsprechender Weise rückgeordnet werden, kann dadurch ein von Umordnungsartefakten freies Messergebnis erhalten werden. Die Umordnung kann basierend auf der Zuordnungsinformation eindeutig durchgeführt werden.

Gemäß einem Ausführungsbeispiel kann die Zuordnungsinformation indikativ für den Rang eines jeweiligen Probenabschnitts in einer Rangfolge (Befüll-Reihenfolge) eines einem Entleeren vorangehenden Befüllens der Probenaufnahmevolumina mit den Probenabschnitten im Verhältnis zu einem Rang des jeweiligen Probenabschnitts in der (insbesondere gegenüber einer Befüll-Reihenfolge unterschiedlichen) Rangfolge des Entleerens (Entleer-Reihenfolge) der Probenabschnitte aus den Probenaufnahmevolumina sein. Um bei der Weiterbearbeitung der Probenabschnitte Artefakte zu vermeiden, die auf eine unterschiedliche Reihenfolge oder Rangfolge der Probenabschnitte beim Entleeren gegenüber dem Befüllen zurückzuführen sind (zum Beispiel wenn die Rahmenbedingungen, etwa eine Lösungsmittelzusammensetzung, beim Weiterverarbeiten zeitlich variieren), kann der dem jeweiligen Probenabschnitt zugeordnete Datensatz der Zuordnungsinformation zum Beispiel den Entleer-Rang mit dem Befüll-Rang korrelieren. Nicht erfindungsgemäß besteht dann eine annähernd vollständige Freiheit der Wahl bzw. Einstellung einer gewünschten Entleer-Reihenfolge im Verhältnis zur Befüll-Reihenfolge, da durch die Zuordnungsinformation selbst bei einem komplexen Umordnen der Probenabschnitte stets eine eindeutige (Befüll- und Entleer-) Historie eines bestimmten Probenabschnitts rekonstruierbar bzw. nachverfolgbar bleibt. Dies macht die Fluidverarbeitung fehlerrobust und gleichzeitig unanfällig für Probenverschleppung.

Gemäß einem Ausführungsbeispiel kann die Probenquelle als erste Trennstufe zum Trennen der fluidischen Probe in die Probenabschnitte ausgebildet sein, wobei zumindest ein Teil der Probenabschnitte mindestens eine Fraktion der fluidischen Probe aufweist. Die Fluidverarbeitungsvorrichtung kann als zweite Trennstufe zum Trennen von zumindest einem Teil der Fraktionen der Probenabschnitte in Teilfraktionen ausgebildet sein. Beide Trennstufen können chromatographische Trennstufen sein. Somit kann die Anordnung als Probentrenngerät ausgebildet sein.

Das Probentrenngerät kann ein mikrofluidisches Messgerät, ein Flüssigchromatografiegerät bzw. eine HPLC- bzw. UHPLC-Anlage sein. Allerdings sind andere Anwendungen möglich.

Das Probentrenngerät kann in jeder Trennstufe eine Pumpe zum Bewegen der jeweiligen mobilen Phase aufweisen. Eine solche Pumpe kann zum Beispiel dazu eingerichtet sein, die mobile Phase mit einem hohen Druck, zum Beispiel einige 100 bar bis hin zu 1000 bar und mehr, durch das System hindurch zu befördern.

Alternativ oder ergänzend kann das Probentrenngerät einen Probenfraktionierer zum Fraktionieren der getrennten Komponenten aufweisen. Ein solcher Fraktionierer kann die verschiedenen Komponenten zum Beispiel in verschiedene Flüssigkeitsbehälter führen. Die analysierte Fluidprobe kann aber auch verworfen werden.

Vorzugsweise kann das Probentrenngerät in einer oder jeder der Trennstufen einen Detektor zur Detektion der getrennten Komponenten aufweisen. Ein solcher Detektor kann ein Signal erzeugen, welches beobachtet und/oder aufgezeichnet werden kann, und welches für die Anwesenheit und Menge der Probenkomponenten in dem durch das System fließenden Fluid indikativ ist.

### KURZE BESCHREIBUNG DER FIGUREN

Andere Ziele und viele der begleitenden Vorteile von Ausführungsbeispielen der vorliegenden Erfindung werden leicht wahrnehmbar werden und besser verständlich werden unter Bezugnahme auf die folgende detailliertere Beschreibung von Ausführungsbeispielen in Zusammenhang mit den beigefügten Zeichnungen. Merkmale, die im Wesentlichen oder funktionell gleich oder ähnlich sind, werden mit denselben Bezugszeichen versehen.

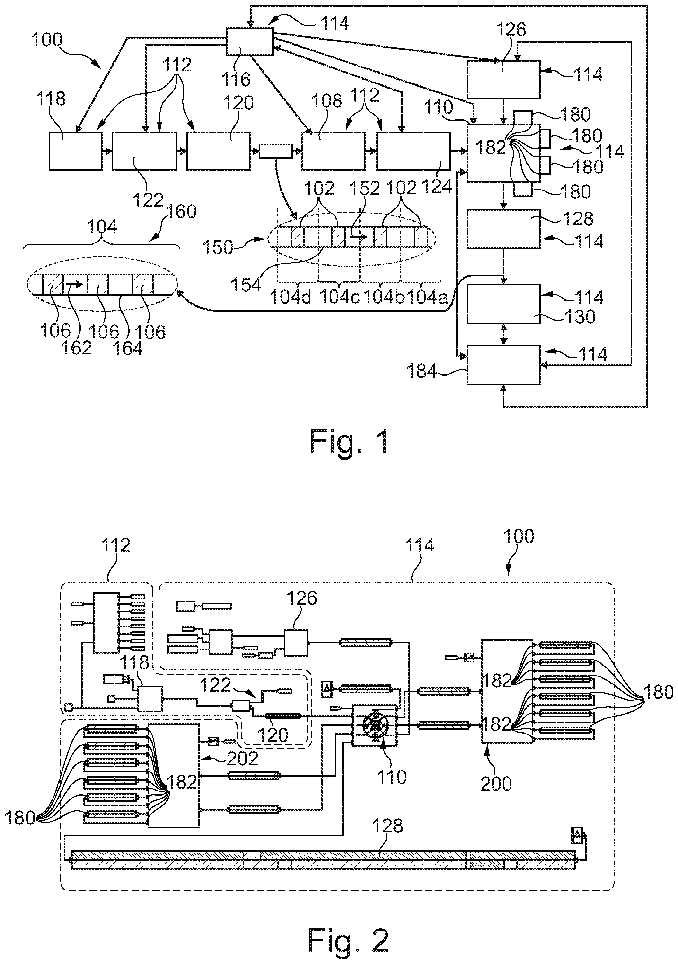

Figur 1 zeigt eine zweidimensionale Flüssigkeitschromatographie-Anordnung gemäß einem exemplarischen Ausführungsbeispiel der Erfindung mit einer Probenquelle als erste Trennstufe und einer als zweite Trennstufe ausgebildeten Fluidverarbeitungsvorrichtung zum Verarbeiten von mittels der Probenquelle bereitgestellten aufeinanderfolgenden fluidischen Probenabschnitten.
Figur 2 zeigt eine zweidimensionale Flüssigkeitschromatographie-Anordnung mit einer anderen Fluidverarbeitungsvorrichtung zum Verarbeiten von mittels einer Probenquelle bereitgestellten aufeinanderfolgenden fluidischen Probenabschnitten gemäß einem exemplarischen Ausführungsbeispiel der Erfindung.

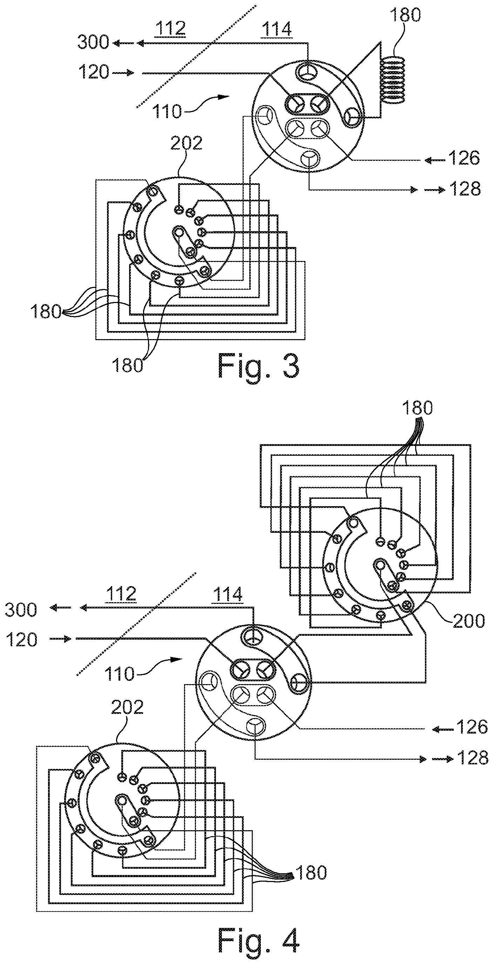

Figur 3 zeigt ein Modulatorventil, eine diesem zugeordnete Probenschleife als Probenaufnahmevolumen sowie ein Parkventil in Fluidkommunikation mit einer Mehrzahl von diesem zugeordneten Probenaufnahmevolumina zum Zwischenspeichern von Probenabschnitten zwischen einer Probenquelle und einer fluidischen Weiterverarbeitungseinrichtung gemäß einem exemplarischen Ausführungsbeispiel der Erfindung.
Figur 4 zeigt ein Modulatorventil, ein Parkventil in Fluidkommunikation mit einer Mehrzahl von diesem zugeordneten Probenaufnahmevolumina sowie ein weiteres Parkventil in Fluidkommunikation mit einer weiteren Mehrzahl von diesem zugeordneten Probenaufnahmevolumina zum Zwischenspeichern von Probenabschnitten zwischen einer Probenquelle und einer Fluidverarbeitungsvorrichtung zum fluidischen Weiterverarbeiten gemäß einem exemplarischen Ausführungsbeispiel der Erfindung.

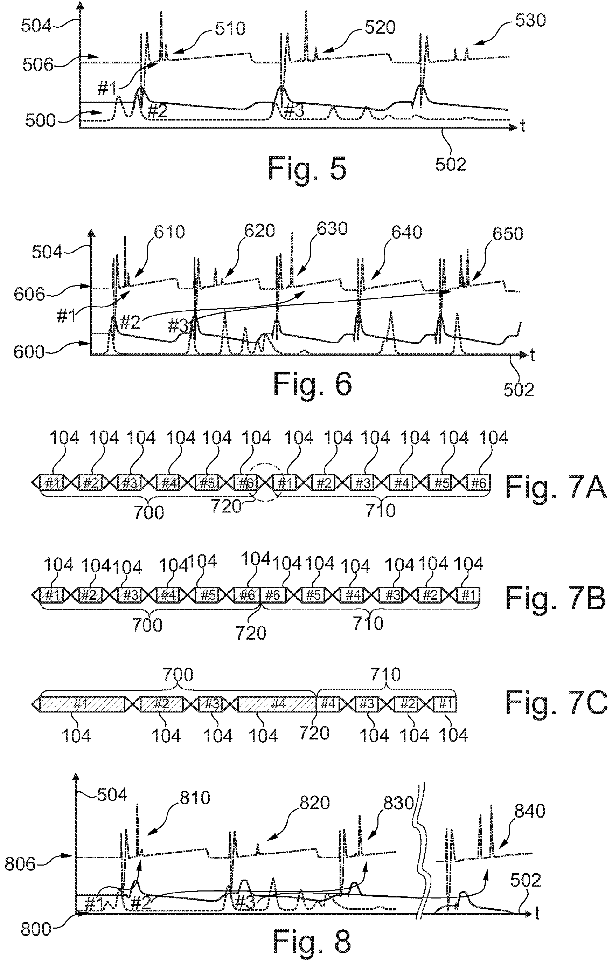

Figur 5 zeigt ein Chromatogramm einer ersten Chromatographie-Trennstufe und ein Chromatogramm einer zweiten Chromatographie-Trennstufe eines zweidimensionalen Flüssigchromatographiegeräts, bei dem Artefakte zu erkennen sind, die zumindest auch auf ein Zwischenspeichern von Probenabschnitten zwischen der ersten Trennstufe und der zweiten Trennstufe zurückzuführen sind.
Figur 6 zeigt ein anderes Chromatogramm einer ersten Chromatographie-Trennstufe und ein anderes Chromatogramm einer zweiten Chromatographie-Trennstufe eines zweidimensionalen Flüssigchromatographiegeräts, bei dem Artefakte zu erkennen sind, die zumindest auch auf ein Zwischenspeichern von Probenabschnitten zwischen der ersten Trennstufe und der zweiten Trennstufe zurückzuführen sind.
Figur 7A zeigt schematisch eine Reihenfolge des Befüllens von Probenaufnahmevolumina mit Probenabschnitten und eines nachfolgenden Entleerens der zwischengespeicherten Probenabschnitte aus den Probenaufnahmevolumina, wobei das Entleeren in der gleichen Reihenfolge wie das Befüllen durchgeführt wird, wodurch am Übergang zwischen Befüllen und Entleeren die Gefahr der Erzeugung von Artefakten droht.
Figur 7B und Figur 7C zeigen schematisch eine jeweilige Reihenfolge des Befüllens von Probenaufnahmevolumina mit Probenabschnitten und eines nachfolgenden Entleerens der zwischengespeicherten Probenabschnitte aus den Probenaufnahmevolumina gemäß der Erfindung, wobei unter Bildung eines jeweils sprungfreien Übergangs zwischen Befüllen und Entleeren das Entleeren in umgekehrter Reihenfolge wie das Befüllen durchgeführt wird, wodurch qualitative Artefakte vermieden sind.
Figur 8 zeigt ein Chromatogramm einer ersten Chromatographie-Trennstufe und ein Chromatogramm einer zweiten Chromatographie-Trennstufe einer zweidimensionalen Flüssigchromatographie-Anordnung gemäß einem exemplarischen Ausführungsbeispiel der Erfindung, bei dem Artefakte vermieden sind, die auf ein Zwischenspeichern von Probenabschnitten zwischen der ersten Trennstufe und der zweiten Trennstufe zurückzuführen sind.

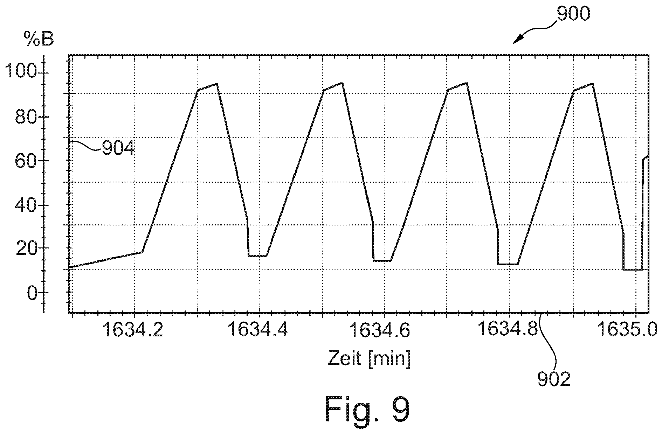

Figur 9 zeigt einen Zeitverlauf der Lösungsmittelzusammensetzung eines Gradientenlaufs einer zweidimensionalen Flüssigchromatographie-Anordnung gemäß einem exemplarischen Ausführungsbeispiel der Erfindung.

Die Darstellung in der Zeichnung ist schematisch.

Bevor die Figuren eingehend beschrieben werden, werden einige allgemeinere Überlegungen der vorliegenden Erfinder zu exemplarischen Ausführungsbeispielen der Erfindung dargestellt.

Gemäß einem exemplarischen Ausführungsbeispiel ist eine hinsichtlich der Unterdrückung von Probenverschleppung vorteilhafte bzw. optimierte Steuersequenz zum Entleeren (auch anschaulich als Ausparken bzw. Auslesen) von Probenabschnitten geschaffen, die in Probenaufnahmevolumina (zum Beispiel Probenschleifen) geparkt bzw. zwischengespeichert werden. Gemäß der Erfindung wird eine Nicht-FIFO (d.h. abweichend von einem "first in, first out"-Prinzip durchgeführte) Entleer-Reihenfolge realisiert werden, um Artefakte beim Peakparken einer zweidimensionalen Flüssigchromatographie (2D-LC) Anordnung zu unterdrücken.

Moderne 2D-LC-Anordnungen können mit einem entkoppelten Schema zum Einfüllen von Probenabschnitten mit Fraktionen einer fluidischen Probe in Probenaufnahmevolumina (insbesondere Probenschleifen von Parkventilen) und für eine Analyse des tatsächlichen bzw. gegenwärtigen Inhalts eines Probenaufnahmevolumens (insbesondere Schleifeninhalt) in einer zweiten Trenndimension ausgestattet sein. Ein zugehöriger Schleifensselektor kann auch als Parkhaus bezeichnet werden und als Fluidventil, mithin Parkventil, ausgebildet sein. Exemplarische Ausführungsbeispiele der Erfindung ermöglichen es, auch beim Vorsehen von einem oder mehreren solcher Parkhäuser eine unerwünschte Probenverschleppung zu vermeiden.

**Figur 1** zeigt eine als Probentrennvorrichtung ausgebildete Anordnung 100 zum Verarbeiten einer fluidischen (zum Beispiel flüssigen) Probe gemäß einem exemplarischen Ausführungsbeispiel der Erfindung.

Die Anordnung 100 enthält eine Fluidverarbeitungsvorrichtung 114 und eine damit wirkgekoppelte Probenquelle 112. Die Fluidverarbeitungsvorrichtung 114 dient zum Weiterverarbeiten, genauer gesagt Weitertrennen, von mittels der Probenquelle 112 bereitgestellten aufeinanderfolgenden fluidischen Probenabschnitten 104. Die Probenabschnitte 104 werden durch die Probenquelle 112 mittels Trennens der fluidischen Probe generiert. Die Anordnung 100 ist somit als zweidimensionales (2D) High-Performance-Liquid-Chromatography (HPLC) System ausgebildet.

Die Probenquelle 112 dient dem Trennen der fluidischen Probe in Fraktionen 102 (entsprechend zugeordneten Peakzonen in einem Chromatogramm), von denen in der gezeigten Darstellung jeweils eine in einer zugehörigen der mehreren aufeinanderfolgenden Probenabschnitten 104 befindlich ist. Allerdings müssen die Grenzen der Probenabschnitte 104 nicht zwingend mit den Grenzen der Fraktionen 102 übereinstimmen, es kann durchaus vorkommen, dass eine Fraktion 102 an einer Grenze zwischen Probenabschnitten 104 zweigeteilt wird und somit in entsprechenden Teilen in zwei oder mehr Probenabschnitten 104 vorliegt. In einem ersten Detail 150 in Figur 1 ist gezeigt, wie einzelne serielle Probenabschnitte 104 (die zur Vereinfachung der Unterscheidung auch als 104a, 104b, 104c, 104d bezeichnet sind) im Inneren eines Fluidpfades 154 entlang einer Fließrichtung 152 in einer ersten Trennstufe, in Form der Probenquelle 112, fließen. Die Trennung der fluidischen Probe in die Fraktionen 102 erfolgt also in der Probenquelle 112 als erste Trennstufe.

Die Anordnung 100 dient ferner dem Trennen von jeder der Fraktionen 102 (bzw. von jedem der Probenabschnitte 104) in mehrere einzelne Teilfraktionen 106. Dies erfolgt in der Fluidverarbeitungsvorrichtung 114 und ist in einem zweiten Detail 160 in Figur 1 gezeigt, welches die einzelnen seriellen Teilfraktionen 106 im Inneren eines Fluidpfades 164 entlang einer Fließrichtung 162 in einer zweiten Trennstufe, die durch die Fluidverarbeitungsvorrichtung 114 gebildet ist, veranschaulicht. Die Trennung der Fraktionen 102 in die Teilfraktionen 106 erfolgt somit in der zweiten Trennstufe durch die Fluidverarbeitungsvorrichtung 114.

Die erste Trennstufe hat eine erste Probemengenverarbeitungskapazität, das heißt eine intrinsische Charakteristik hinsichtlich einer in einem Trennzyklus bzw. in einem Trennzeitintervall verarbeitbaren Probe. Die zweite Trennstufe hat eine zweite Probemengenverarbeitungskapazität, das heißt eine intrinsische Charakteristik hinsichtlich einer in einem Trennzyklus bzw. in einem Trennzeitintervall verarbeitbare Probe. Die erste Trennstufe als Probenquelle 112 liefert einen Fluidfluss, der die Fraktionen 102 neben bzw. zwischen probefreien Lösungsmittelbereichen enthält. Die zweite Trennstufe in Form der Fluidverarbeitungsvorrichtung 114 hat mit den Vorgaben der ersten Trennstufe zurechtzukommen, ohne dass dadurch der Trennprozess gestört wird.

Eine fluidische Schaltanordnung ist gemäß Figur 1 durch ein Blockierventil 108 als Fluidventil und durch ein Modulatorventil 110 als anderes Fluidventil gebildet. Mittels entsprechenden Steuerns des Blockierventils 108 bzw. des Modulatorventils 110 ist es möglich, entweder die erste Trennstufe, d.h. die Probenquelle 112, mit der zweiten Trennstufe, d.h. der Fluidverarbeitungsvorrichtung 114, zu koppeln (das heißt einen Fluidfluss und somit ein Überführen von Probenabschnitten 104 von der ersten Trennstufe in die zweite Trennstufe hinein zu ermöglichen) oder alternativ die erste Trennstufe von der zweiten Trennstufe fluidisch zu entkoppeln (das heißt einen Fluidfluss und somit ein Überführen von Probenabschnitten 104 von der ersten Trennstufe in die zweite Trennstufe zu verunmöglichen). Eine entsprechende Steuerung erfolgt durch eine Steuereinrichtung 116, die das Zusammenwirken der einzelnen Komponenten der Anordnung 100 gemäß Figur 1, insbesondere auch des Blockierventils 108 und des Modulatorventils 110, steuert. Es ist möglich, dass die Funktionen der beiden Ventile 108, 110 in einem gemeinsamen Ventil kombiniert werden.

Die Probenquelle 112 enthält eine erste Flüssigkeitspumpe 118, die eine mobile Phase in Form einer zeitlich veränderlichen Lösungsmittelzusammensetzung zu einem Injektor 122 pumpt. An dem Injektor 122 wird die zu trennende fluidische Probe in die mobile Phase eingeführt. Nachfolgend wird die Mischung aus mobiler Phase und fluidischer Probe durch eine erste chromatographische Trennsäule in Form einer Probentrenneinrichtung 120 durchgeleitet, wo die fluidische Probe in die einzelnen Fraktionen 102 getrennt wird. Die erste Flüssigkeitspumpe 118 und der Injektor 122 werden durch die zentrale Steuereinrichtung 116 gesteuert. Ein erster Detektor 124 erlaubt die Detektion der einzelnen Fraktionen 102.

Die zweite Trennstufe in Form der Fluidverarbeitungsvorrichtung 114 enthält eine zweite Flüssigkeitspumpe oder Fluidfördereinrichtung 126, welche eine weitere mobile Phase (d.h. eine andere, zeitlich konstante oder variable Lösungsmittelzusammensetzung) pumpt und die von der ersten Trennstufe kommenden Flüssigkeitsabschnitte 104 zu einer zweiten Trennsäule bzw. Probentrenneinrichtung 128 transportiert. An der zweiten Chromatographie-Trennsäule bzw. Probentrenneinrichtung 128 der zweiten Trennstufe als Fluidverarbeitungsvorrichtung 114 wird in dem gezeigten Beispiel eine jeweilige Fraktion 102 eines jeweiligen Probenabschnitts 104 in die jeweiligen Teilfraktionen 106 chromatographisch aufgetrennt. Die Teilfraktionen 106 können in einem zweiten -Detektor 130 (z.B. einem UV-, Fluoreszenz-, oder in einem anderen Detektor) nachgewiesen werden. Figur 1 zeigt darüber hinaus, dass die zentrale Steuereinrichtung 116 auch die zweite Flüssigkeitspumpe oder Fluidfördereinrichtung 126 steuert.

Gemäß dem beschriebenen exemplarischen Ausführungsbeispiel erfolgt die Steuerung der zweidimensionalen Flüssigkeitschromatographietrennung durch die Steuereinrichtung 116 folgendermaßen:

Zunächst wird in der ersten Trennstufe/Probenquelle 112 eine chromatographische Trennung der fluidischen Probe in die Fraktionen 102 durchgeführt bzw. zumindest begonnen. Indem die fluidische Schaltanordnung 108, 110 geöffnet ist bzw. geöffnet wird, kann ein in Flussrichtung vorderseitiger Probenabschnitt 104a, der in dem gezeigten Beispiel genau eine Fraktion 102 enthält, von der ersten Trennstufe in die zweite Trennstufe, d.h. die Fluidverarbeitungsvorrichtung 114, übergeführt werden. Danach kann der nachfolgende Probenabschnitt 104b in die zweite Trennstufe überführt werden, usw. Dieses Prozedere kann beliebig oft wiederholt werden, so dass nach und nach die vorgetrennten Probenabschnitte 104 in die zweite Trennstufe eingeführt werden. Anschaulich können durch die beschriebene Steuerlogik Probenabschnitte 104 (und folglich zugehörige Peaks in einem Chromatogramm) an einer Schnittstelle zwischen der ersten Trennstufe bzw. Probenquelle 112 und der zweiten Trennstufe bzw. Fluidverarbeitungsvorrichtung 114, genauer gesagt in bzw. an dem Modulatorventil 110, geparkt werden, während mindestens ein anderer Probenabschnitt 104 noch in der zweiten Trennstufe, d.h. der Fluidverarbeitungsvorrichtung 114, verarbeitet (insbesondere getrennt) wird. In der zweiten Trennstufe kann ebenfalls ein Gradientenmodus angewendet werden, der von dem Gradientenmodus der ersten Trennstufe aber unabhängig gesteuert werden kann.

Die Fluidverarbeitungsvorrichtung 114 weist zum zwischenzeitlichen Speichern der Probenabschnitte 104 vor deren Weiterverarbeitung mehr als zwei Probenaufnahmevolumina 180 in Form von Kapillarstücken zwischen jeweiligen Ports 182 des Modulatorventils 110 auf, die entsprechend einer Ansteuerung des Modulatorventils 110 durch die Steuereinrichtung 116 zum aufeinanderfolgenden zwischenzeitlichen Befüllen mit einem jeweiligen der Probenabschnitte 104 eingerichtet sind. Jedes der Probenaufnahmevolumina 180 ist also als Fluidleitungsstück zwischen zwei jeweiligen Ports 182 des Modulatorventils 110 ausgebildet. Die Steuereinrichtung 116 ist auch zum derartigen aufeinanderfolgenden Entleeren der Probenabschnitte 104 aus den Probenaufnahmevolumina 180 eingerichtet, dass vermieden ist, dass zwei jeweilige der Probenabschnitte 104 beim Entleeren miteinander in Kontakt gebracht werden, welche die Probenquelle 112 nicht unmittelbar benachbart verlassen haben. Zum Beispiel dürfen Probenabschnitte 104b und 104c, die in der Probenquelle 112 unmittelbar benachbart waren, unmittelbar nacheinander entleert werden. Ein unmittelbar nacheinander durchgeführtes Entleeren der Probenabschnitte 104a und 104d, die in der Probenquelle 112 nicht unmittelbar benachbart, sondern durch Probenabschnitte 104b und 104c beabstandet waren, kann dagegen von der Steuerlogik unterbunden werden. Dadurch kann ein direkter Kontakt zwischen hinsichtlich der Trennung in der ersten Dimension stark unterschiedlicher Probenabschnitte 104 durch Probenreste in Zuleitungen des Modulatorventils 110, etc., unterbunden werden und somit eine Verunreinigung eines Probenabschnitts 104 mit falschen artifiziellen Zusatzpeaks vermieden werden. Eine Einfüll- und Entleer-Reihenfolge kann entsprechend angepasst werden, was auch ein Umordnen der Prozessier-Reihenfolge der Probenabschnitte nach dem Befüllen und vor dem Entleeren umfassen kann.

Die Steuereinrichtung 116 ist darüber hinaus zum Steuern einer Weiterverarbeitung der Probenabschnitte 104 basierend auf einer Zuordnungsinformation eingerichtet. Zu diesem Zweck ist eine Zuordnungseinrichtung 184 als Teil der Fluidverarbeitungsvorrichtung 114 vorgesehen, die zum Zuordnen von Zuordnungsinformation zu zumindest einen Teil der entleerten Probenabschnitte 104 eingerichtet ist. Die Zuordnungsinformation ist indikativ für eine Reihenfolge des Befüllens und des Entleerens eines jeweiligen der Probenabschnitte 104 und kann einen entsprechenden Entleer-Rang eines Probenabschnitts 104 (d.h. eine Position des Probenabschnitts 104 in einer Entleer-Rangfolge der Probenabschnitte 104) einem zugehörigen Befüll-Rang dieses Probenabschnitts 104 (d.h. einer Position des Probenabschnitts 104 in einer Befüll-Rangfolge der Probenabschnitte 104) zuordnen. Dies erlaubt selbst bei einem Umordnen der Probenabschnitte 104 zwischen Befüllen und Entleeren zu jedem Zeitpunkt die eindeutige Bestimmung, welche Historie ein gegenwärtig in der Fluidverarbeitungsvorrichtung 114 befindliches Fluid durchlaufen hat. Damit kann der Trennprozess in der zweiten Dimension (insbesondere ein Gradientenlauf) auf jeweils gerade fließendes Fluid angepasst werden.

Die Steuereinrichtung 116, die mit der Zuordnungseinrichtung 184 kommunizierfähig gekoppelt sein kann, kann zum Steuern einer Weiterverarbeitung der Probenabschnitte 104 basierend auf der Zuordnungsinformation eingerichtet sein. Dieses zuordnungsinformationsbasierte Steuern der Weiterverarbeitung der Probenabschnitte 104 kann ein Steuern eines chromatographischen Trennens der Fraktionen 102 der Probenabschnitte 104 in die Teilfraktionen 106 aufweisen. Das Steuern des Trennens kann ein auf Basis der Zuordnungsinformation individuell für jeden einzelnen Probenabschnitt 104 separat durchgeführtes Einstellen eines Gradienten einer Zusammensetzung einer mobilen Phase beinhalten, die durch die Probentrenneinrichtung 128 mit daran adsorbierter fluidischer Probe eines jeweiligen Probenabschnitts 104 gefördert wird. Das Steuern des Trennens kann auch ein Umordnen einer Reihenfolge von den einzelnen Probenabschnitten 104 zugeordneten Detektionssignalen basierend auf der Zuordnungsinformation aufweisen. Wenn die Chronologie der Trennung durch eine von der Reihenfolge des Befüllens abweichende Reihenfolge des Entleerens gestört wird, hat dies aufgrund der unterschiedlichen Wartezeiten der Probenabschnitte 104 in den Probenaufnahmevolumina 180 zur Folge, dass die unmittelbar aus einem Chromatogramm entnehmbaren Retentionszeiten mit probenabschnittspezifischen Offsets versehen sein können. Diese können mittels der die Historie jedes Probenabschnitts 104 wiedergebenden Zuordnungsinformation rechnerisch korrigiert werden, um ein von der Verarbeitungshistorie unabhängiges Chromatogramm zu erhalten.

Das aufeinanderfolgende Entleeren der Probenabschnitte 104 aus den Probenaufnahmevolumina 180 erfolgt mittels der Steuereinrichtung 116 derart, dass vermieden ist, dass Bestandteile einer zu einem gerade entleerten Probenabschnitt 104 vor dem Befüllen nicht benachbarten Probenabschnitt 104 in Zuleitungen verbleiben und den gerade entleerten Probenabschnitt 104 verunreinigen. Eine Reihenfolge des Befüllens der Probenaufnahmevolumina 180 mit den Probenabschnitten 104 und eine Reihenfolge des Entleerens der Probenabschnitte 104 aus den Probenaufnahmevolumina 180 können mittels der Steuereinrichtung 116 somit derart aufeinander angepasst sein, dass beim Übergang zwischen dem Befüllen und dem Entleeren zuerst das zuletzt befüllte Probenaufnahmevolumen 180 entleert wird. Das Entleeren der Probenabschnitte 104 aus dem Probenaufnahmevolumina 180 2. wird mittels der Steuereinrichtung 116 in umgekehrter Reihenfolge zu einer Reihenfolge des Befüllens der Probenaufnahmevolumina 180 mit den Probenabschnitten 104 erfolgen ("last in, first out"). Das Befüllen und das Entleeren der Probenaufnahmevolumina 180 kann mittels Schaltens des als Fluidventil ausgebildeten Modulatorventils 110 mittels der Steuereinrichtung 116 durchgeführt werden.

Ergänzend zu einer Umordnung der Probenabschnitte 104 zwischen Befüllen und Entleeren kann das aufeinanderfolgende Entleeren der Probenabschnitte 104 aus den Probenaufnahmevolumina 180 gesteuert durch die Steuereinrichtung 116 zum Vermeiden qualitativer Artefakte auch derart erfolgen, dass eine in Fluidverbindung mit den Probenaufnahmevolumina 180 bringbare Zuleitung zum Reinigen derselben mit einem Spülfluid (d.h. probenfreier mobiler Phase) gespült wird. Dabei kann die Zuleitung mit einem von zu detektierender fluidischer Probe freiem Fluid eines in einem Probenaufnahmevolumen 180 befindlichen Probenabschnitts 104 als das Spülfluid gespült werden. Detail 150 zeigt, dass aufgrund der Detektion der Fraktionen 102 in dem ersten Detektor 124 bekannt ist oder ermittelbar ist, in welchen Bereichen eines jeweiligen Probenabschnitts 104 eine Fraktion 102 der fluidischen Probe befindlich ist und in welchen Bereichen probenfreie mobile Phase befindlich ist. Letztere probenfreie Bereiche eines jeweiligen Probenabschnitts 104 können zum Spülen von Zuleitungen vor dem Entleeren eines Probenabschnitts 104 verwendet werden. Eine jeweilige Zuleitung kann mittels der Steuereinrichtung 116 mit dem Spülfluid zwischen dem Befüllen und dem Entleeren gespült werden. Dies hat den Vorteil, dass ohne zusätzlichen apparativen Aufwand und ohne Einschränkung hinsichtlich einer Befüll- und Entleer-Reihenfolge eine Kontamination eines Probenabschnitts 104 mit fluidischer Probe eines anderen Probenabschnitts 104 vermeidbar ist.

**Figur 2** zeigt eine als zweidimensionales Flüssigkeitschromatographie-System ausgebildete Anordnung 100 mit einer anderen Fluidverarbeitungsvorrichtung 114 zum Verarbeiten von mittels einer Probenquelle 112 bereitgestellten aufeinanderfolgenden fluidischen Probenabschnitten 104 gemäß einem exemplarischen Ausführungsbeispiel der Erfindung.

Figur 2 zeigt das Modulatorventil 110 sowie zusätzlich zwei Parkventile 200, 202 in Fluidverbindung mit dem Modulatorventil 110. Jedes der Parkventile 200, 202 ist zum Zwischenspeichern einer Mehrzahl von Probenabschnitten 104 (siehe Figure 1) ausgebildet. Den Zwischenspeicherventilen oder Parkventilen 200, 202 ist hierfür jeweils eine Mehrzahl (sechs im gezeigten Beispiel) von Probenaufnahmevolumina 180 zugeordnet. Figur 2 zeigt, dass außer den Probenaufnahmevolumina 180 diverse Zu- und Ableitungen (mit jeweils zugeordnetem Kapillarvolumen) vorgesehen sind, entlang welche sich die Probenabschnitte 104 bewegen, um zunächst in der Probenquelle 112 einer ersten Trennung unterworfen zu werden und nachfolgend in der mittels der Fluidverarbeitungsvorrichtung 114 ausgebildeten zweiten Trennstufe einer weiteren Trennung unterworfen zu werden. Da sich in den Zu- und Ableitungen noch Fluidreste eines vorangehenden Probenabschnitts 104 befinden können, kann gemäß einem Ausführungsbeispiel der Erfindung eine Durchführreihenfolge der Probenabschnitte 104 durch die Zu- bzw. Ableitungen in einer Weise gesteuert werden, dass eine zu Artefakten führende Probenvermischung unterbunden wird.

**Figur 3** zeigt ein Modulatorventil 110, eine Probenschleife als Probenaufnahmevolumen 180 sowie ein Parkventil 202 in Fluidkommunikation mit dem Modulatorventil 110 und einer Mehrzahl von weiteren Probenaufnahmevolumina 180 zum Zwischenspeichern von Probenabschnitten 104 zwischen einer Probenquelle 112 und einer fluidischen Weiterverarbeitungseinrichtung als Fluidverarbeitungsvorrichtung 114 gemäß einem exemplarischen Ausführungsbeispiel der Erfindung. Figur 3 zeigt ein 12-Port Säulenauswahlventil als Parkventil 202, dem eine Mehrzahl von Sampling- bzw. Parkschleifen als weitere Probenaufnahmevolumina 180 zugeordnet ist. In Figur 3 ist ferner gezeigt, dass ein Port des Modulatorventils 110 mit einem Wasteanschluss 300 fluidisch gekoppelt ist.

Betreffend die Probenquelle 112 sind Anschlüsse zu der Probentrenneinrichtung 120 sowie zu dem Wasteanschluss 300 gezeigt. Entsprechend der gezeigten Ventilstellung des Modulatorventils 110 wird gegenwärtig vorgetrennte fluidischen Probe (d.h. ein Probenabschnitt 104) von der Probentrenneinrichtung 120 durch das Modulatorventil 110 in das Probenaufnahmevolumen 180 gefördert.

Gleichzeitig fördert die Fluidfördereinrichtung 126 mobile Phase durch das Modulatorventil 110 und pumpt in den gezeigten Ventilstellungen dadurch einen gegenwärtig in einem der Probenaufnahmevolumina 180 des Parkventils 202 befindlichen Probenabschnitt 104 durch das Modulatorventil 110 zu der Probentrenneinrichtung 128.

Durch ein entsprechendes Schalten der Fluidventile 110, 202 können somit Probenabschnitte 104 in jeweilige Probenaufnahmevolumina 180 eingefüllt werden oder zum Weiterverarbeiten in dem analytischen Trennpfad der zweiten Trennstufe aus den Probenaufnahmevolumina 180 entleert werden.

**Figur 4** zeigt ein Modulatorventil 110, ein Parkventil 200 in Fluidkommunikation mit einer Mehrzahl von Probenaufnahmevolumina 180 sowie ein weiteres Parkventil 202 in Fluidkommunikation mit einer weiteren Mehrzahl von Probenaufnahmevolumina 180 zum Zwischenspeichern von Probenabschnitten 104 zwischen einer Probenquelle 112 und einer fluidischen Weiterverarbeitungseinrichtung als Fluidverarbeitungsvorrichtung 114 gemäß einem anderen exemplarischen Ausführungsbeispiel der Erfindung. Figur 4 zeigt eine Tandemkonfiguration mit zwei Parkhäusern. Die von der Probentrenneinrichtung 120 eluierten Fraktionen der ersten Dimension können nacheinander in den einzelnen Probenaufnahmevolumina 180 des Parkventils 200 aufgenommen werden, während die analytische Pumpe oder Fluidfördereinrichtung 126 der zweiten Dimension Probenabschnitte 104 aus den weiteren Probenaufnahmevolumina 180 ausliest bzw. entleert, die in dem anderen Parkventil 202 (bzw. dem Parkhaus) geparkt sind.

Wenn zum Beispiel eine Anordnung von zwei Parkventilen 200, 202 vorgesehen ist (siehe zum Beispiel Figur 4), kann ein Schalten eines die Kopplung zwischen der ersten Trenndimension und der zweiten Trenndimension bewerkstelligenden Modulatorventils 110 nach dem Auslesen bzw. Ausparken der Probenabschnitte 104 aus den Probenaufnahmevolumina 180 von einem der beiden zugehörigen Parkventile 200, 202 erfolgen. Ein gegenwärtiges Probenaufnahmevolumen 180, das einem der Parkventile 200, 202 zugehörig ist, kann mit einem Flusspfad verbunden werden, welcher einem analytischen Trennpfad der zweiten Dimension entspricht. Welche Flüssigkeit (fluidische Probe bzw. mobile Phase/Matrix) auch immer in den Zuleitungen befindlich ist (das heißt in den Verbindungen zu dem Parkventil und der letzten Parkschleife als Probenaufnahmevolumen 180, die mit dem Abfluss der ersten Dimension gefüllt worden ist), kann diese Flüssigkeit etwas Eluent-Fraktion enthalten. Ein sofortiges Schalten des jeweiligen Parkventils zu einer anderen Parkschleife als Probenaufnahmevolumen 180 würde den Inhalt der Transferkapillaren mit einer früheren Fraktion in Wirkverbindung bringen und daher möglicherweise Artefakte verursachen. Dies kann zu fehlerhaften Ergebnissen führen, da der Benutzer schlussfolgern würde, dass das Artefakt auch zu der analysierten Fraktion gehört. Das Auftreten derartiger Artefakte ist in Figur 5 gezeigt.

**Figur 5** zeigt ein Chromatogramm 500 einer ersten Chromatographie-Trennstufe und ein Chromatogramm 506 einer zweiten Chromatographie-Trennstufe eines zweidimensionalen Flüssigchromatographiegeräts, bei dem Artefakte zu erkennen sind, die auf ein Zwischenspeichern von Probenabschnitten 104 zwischen der ersten Trennstufe und der zweiten Trennstufe zurückzuführen sind. Entlang einer Abszisse 502 ist die Retentionszeit aufgetragen. Entlang einer Ordinate 504 ist ein Detektionssignal aufgetragen.

Gemäß Figur 5 sind, wie mit Bezugszeichen 510 gezeigt ist, die Ergebnisse in der zweiten Trenndimension eines Peaks mit der Bezeichnung #1 korrekt. Allerdings sind, wie mit Bezugszeichen 520 gezeigt ist, die Ergebnisse in der zweiten Trenndimension eines Peaks mit der Bezeichnung #2 nicht korrekt. Ferner sind, wie mit Bezugszeichen 530 gezeigt ist, die Ergebnisse in der zweiten Trenndimension eines Peaks mit der Bezeichnung #3 korrekt.

Figur 5 ist eine Ursache für fehlerhafte Ergebnisse zu entnehmen. Diese Ursache ist ein Schalten der Ventilanordnung 110, 200, 202 für die weiterführende Analyse eines Peaks #2 der ersten Dimension, wenn Peak #3 gerade durch die Transferleitungen, die das Parkventil 200 oder ggfs. 202 mit dem Modulatorventil 110 verbinden und in dem sich auch Peak #2 zu diesem Zeitpunkt aufhält, eluiert wird. Das Ergebnis (siehe Bezugszeichen 520) in der zweiten Trenndimension ist daher eine Mischung zwischen dem Peak #2 der ersten Dimension und Artefakten von Peak #3. Figur 5 veranschaulicht daher die Ursache von fehlerhaften Resultaten in der zweiten Trenndimension.

Daher sollte ein zugeordneter Analyselauf mit dem Probenaufnahmevolumen 180 bzw. der Schleife durchgeführt werden, das/die in der ersten Dimension zuletzt im Einsatz war, und/oder es kann eine Reinigungsprozedur durchgeführt werden, bevor die Analyse der zuvor eingeführten Fraktionen beginnen kann. Daher kann der Inhalt der Transferleitungen (und möglicherweise der Schleife, die zuletzt in der ersten Dimension im Einsatz war) die Probentrenneinrichtung 130 der zweiten Dimension passieren, um solch eine Reinigung durchzuführen.

Wenn dann allerdings eine Rückkehr zu der ersten Position erfolgt (oder zu irgendeiner anderen Position, welche die Probenaufnahmevolumina 180 bzw. Schleifen mit undefiniertem Inhalt oder mit schon geparkten Proben passiert), werden alle der übersprungenen Schleifen zumindest zeitweise mit der analytischen Pumpe oder Fluidfördereinrichtung 126 der zweiten Dimension verbunden. Dadurch erfolgt eine Fluidmischung in der Auslasstransferleitung. Dies ist in Figur 6 gezeigt.

**Figur 6** zeigt ein anderes Chromatogramm 600 einer ersten Chromatographie-Trennstufe und ein anderes Chromatogramm 606 einer zweiten Chromatographie-Trennstufe eines zweidimensionalen Flüssigchromatographiegeräts, bei dem Artefakte zu erkennen sind, die auf ein Zwischenspeichern von Probenabschnitten 104 zwischen der ersten Trennstufe und der zweiten Trennstufe zurückzuführen sind.

Gemäß Figur 6 sind, wie mit Bezugszeichen 610 gezeigt ist, die Ergebnisse in der zweiten Trenndimension des Peaks mit der Bezeichnung #1 korrekt. Ferner zeigt Bezugszeichen 620 ein erwartetes Merkmal gemäß einem Reinigungslauf mit Inhalt des Peaks mit der Bezeichnung #3 in der ersten Trenndimension. Ferner sind, wie mit Bezugszeichen 630 gezeigt ist, die Ergebnisse in der zweiten Trenndimension des Peaks mit der Bezeichnung #2 korrekt. Darüber hinaus zeigt Bezugszeichen 640, wie erwartet, ein Ergebnis gemäß einem Reinigungslauf ohne Inhalt. Allerdings sind, wie mit Bezugszeichen 650 gezeigt ist, die Ergebnisse in der zweiten Trenndimension des Peaks mit der Bezeichnung #3 nicht korrekt, und zwar zum Beispiel aufgrund des Prozesses wie in [0087] beschrieben.

Auch Figur 6 zeigt somit eine Quelle fehlerhafter zweidimensionaler Trennergebnisse. Diese können als Querströmung während des Zurückförderns bezeichnet werden.

Um derartige Probleme zu vermeiden, wird gemäß der Erfindung ein umgekehrtes Entleeren der in den Probenaufnahmevolumina 180 eingefüllten Probenabschnitte 104 bzw. ein Entleeren der in den Probenaufnahmevolumina 180 eingefüllten Probenabschnitte 104 in Rückwärtsrichtung erfolgen. In diesem Zusammenhang kann es vorteilhaft sein, die Messdaten entsprechend der (im Vergleich zum Befüllen) umgekehrten Entleerreihenfolge umzusortieren, um eine korrekte Darstellung (d.h. entsprechend der Elusionsreihenfolge in der ersten Dimension) der Probe entlang der Zeitachse des Detektionssignals der zweiten Dimension zu erhalten. Die Reihenfolge des Entleerens der Probenaufnahmevolumina 180 kann daher derart erfolgen, dass jedes Übersprechen zwischen den Probenaufnahmevolumina 180 bzw. der darin enthaltenen Probenabschnitte 104 vermieden ist. Dies stellt eine korrekte Interpretierbarkeit der Ergebnisse sicher. Eine entsprechende Lösung gemäß einem exemplarischen Ausführungsbeispiel der Erfindung besteht darin, dass die Peak-Fraktionen in der Fluidverarbeitungsvorrichtung 114 in der (gegenüber dem Auslass der Probenquelle 112) umgekehrten Reihenfolge analysiert werden, so dass die individuellen Fraktionen frei von Übersprechen sind. Dies erzeugt korrekte Ergebnisse.

**Figur 7A** zeigt schematisch eine Reihenfolge des Befüllens (siehe Bezugszeichen 700) von Probenaufnahmevolumina 180 mit Probenabschnitten 104 und eines nachfolgenden Entleerens (siehe Bezugszeichen 710) der zwischengespeicherten Probenabschnitte 104, wobei das Entleeren in der gleichen Reihenfolge wie das Befüllen durchgeführt wird. Dadurch droht die Gefahr von Artefakten. Die Befüll- bzw. Entleer-Reihenfolge gemäß Figur 7A verwirklicht eine Befüllung in Vorwärtsrichtung (das heißt eine Befüllung der Probenaufnahmevolumina 180 in der Reihenfolge der Probenabschnitte 104 #1, #2, #3, #4, #5, #6) und ein Entleeren bzw. Auslesen in entsprechender Reihenfolge wie bei der Befüllung (das heißt ein Entleeren der Probenaufnahmevolumina 180 in der Reihenfolge der Probenabschnitte 104 #1, #2, #3, #4, #5, #6). An einer Schnittstelle 720 zwischen dem Befüllen und dem Entleeren erfolgt ein Schalten der Ventilanordnung 110, 200, 202.

**Figur 7B** und **Figur 7C** zeigen jeweils schematisch eine Reihenfolge des Befüllens von Probenaufnahmevolumina 180 mit Probenabschnitten 104 und einem nachfolgenden Entleeren der zwischengespeicherten Probenabschnitte 104 gemäß der Erfindung, wobei das Entleeren in umgekehrter Reihenfolge wie das Befüllen durchgeführt wird, wodurch zumindest qualitative Artefakte (d.h. das Auftreten falscher Peaks in einem Chromatogramm) vermieden sind.

Die Befüll- bzw. Entleer-Reihenfolge gemäß Figur 7B verwirklicht eine Befüllung in Vorwärtsrichtung (das heißt eine Befüllung der Probenaufnahmevolumina 180 in der Reihenfolge der Probenabschnitte 104 #1, #2, #3, #4, #5, #6) und ein Entleeren bzw. Auslesen in einer gegenüber der Befüllung umgekehrten Reihenfolge (das heißt ein Entleeren der Probenaufnahmevolumina 180 in der Reihenfolge der Probenabschnitte 104 #6, #5, #4, #3, #2, #1). Figur 7B entspricht also einem "last in, first out" Schema. Hierfür erfolgt ein sequenzielles Schalten zuerst des Modulatorventils 110 und dann des jeweiligen Parkventils 200, 202 (Rückwärtsbewegung).

Die Befüll- bzw. Entleer-Reihenfolge gemäß Figur 7C verwirklicht eine Befüllung in Vorwärtsrichtung (das heißt eine Befüllung der Probenaufnahmevolumina 180 in der Reihenfolge der Probenabschnitte 104 #1, #2, #3, #4) und ein Entleeren bzw. Auslesen in einer gegenüber der Befüllung umgekehrten Reihenfolge (das heißt ein Entleeren der Probenaufnahmevolumina 180 in der Reihenfolge der Probenabschnitte 104 #4, #3, #2, #1). Gemäß Figur 7C werden nur vier Slots in Vorwärtsrichtung gefüllt und dann in umgekehrter Reihenfolge entleert bzw. ausgelesen. Figur 7C entspricht einem Peak-gesteuerten Schalten unter Verwendung nur eines Teils des Parkhauses, gefolgt von einer Rückwärtsbewegung.

Anschaulich gesprochen kann ein Rückfördern durchgeführt werden, bei dem die Probenaufnahmevolumina 180 (zum Beispiel Probenschleifen) in umgekehrter Reihenfolge analysiert werden. Gemäß exemplarischen Ausführungsbeispielen ist es nicht nur möglich, vollständig gefüllte Parkventile 200, 202 zu unterstützen (d.h. die entsprechenden Probenaufnahmevolumina 180 alle aufzufüllen und zu entleeren), sondern es ist auch möglich, den Workflow so anzupassen, dass die Probenaufnahmevolumina 180 eines Parkventils 200, 202 nur teilweise aufgefüllt werden und die Probentrenneinrichtung 130 in der zweiten Dimension beschäftigt gehalten wird.

**Figur 8** zeigt ein Chromatogramm 800 einer ersten Chromatographie-Trennstufe und ein Chromatogramm 806 einer zweiten Chromatographie-Trennstufe eines zweidimensionalen Flüssigchromatographiegeräts als Anordnung 100 gemäß einem exemplarischen Ausführungsbeispiel der Erfindung, bei dem Artefakte vermieden sind, die auf ein Zwischenspeichern von Probenabschnitten 104 zwischen der ersten Trennstufe und der zweiten Trennstufe zurückzuführen sind.

Gemäß Figur 8 sind, wie mit Bezugszeichen 810 gezeigt ist, die Ergebnisse in der zweiten Trenndimension des Peaks mit der Bezeichnung #1 korrekt. Ferner zeigt Bezugszeichen 820 ein erwartetes Merkmal gemäß einem Reinigungslauf mit Inhalt des Peaks mit der Bezeichnung #3 in der ersten Trenndimension. Ferner sind, wie mit Bezugszeichen 830 gezeigt ist, die Ergebnisse in der zweiten Trenndimension des Peaks mit der Bezeichnung #2 korrekt. Auch sind nun, wie mit Bezugszeichen 840 gezeigt ist, die Ergebnisse in der zweiten Trenndimension des Peaks mit der Bezeichnung #3 korrekt.

Wie anhand Figur 8 zu erkennen ist, können mit der Schaltreihenfolge zum Befüllen und Entleeren gemäß einem exemplarischen Ausführungsbeispiel der Erfindung korrekte Ergebnisse erhalten werden. Weder Einflüsse von Probenverschleppung noch ein fluidisches Übersprechen führt zu Artefakten im Messspektrum. Figur 8 zeigt somit eine zweidimensionale Analyse unter Verwendung einer Reinigung und eines umgekehrten Ausparkens. Figur 8 kann entnommen werden, dass alle Ergebnisse korrekt sind. Der Peak #3 aus der ersten Trenndimension wird nun allerdings wesentlich später in dem Lauf analysiert, was auf das Entleeren in umgekehrter Reihenfolge zurückzuführen ist. Dieser Effekt kann rechnerisch unter Verwendung von Zuordnungsinformation kompensiert werden.

Abhängig von dem Interesse an dem Inhalt des letzten Probeaufnahmenvolumens 180 kann der Reinigungsgradient eine vollständige Analyse in der zweiten Dimension oder eine verkürzte Version sein, die auf einen Transport des Inhalts des Probenaufnahmevolumens 180 und des Leitunginhalts herunter bis zur zweiten Probentrenneinrichtung 130 fokussiert.

Aufgrund der vollständigen Verfolgbarkeit der Probenfraktionen und ihrer Analysen in der zweiten Trenndimension ist es (fehlerrobust sowie einfach) möglich, die einzelnen Datenblöcke der zweiten Dimension entsprechend der Elusionsreihenfolge der Fraktionen in der ersten Dimension umzuordnen. Insbesondere ist es möglich, eine Rückrechnung des Gradienten (Drift-Modus) der zweiten Dimension auf die Werte zum Zeitpunkt des Parkens bzw. Einfüllens durchzuführen.

**Figur 9** zeigt einen Zeitverlauf der Lösungsmittelzusammensetzung eines zweidimensionalen Flüssigchromatographiegeräts gemäß einem exemplarischen Ausführungsbeispiel der Erfindung. Genauer gesagt zeigt Figur 9 ein Diagramm 900 mit einer Abszisse 902, entlang der die Messzeit aufgetragen ist, und mit einer Ordinate 904, entlang der die zeitliche Zusammensetzung einer mobilen Phase für einen Gradientenlauf im Rahmen eines chromatografischen Trennexperiments aufgetragen ist (genauer gesagt der Anteil eines Lösungsmittels B der Zusammensetzung). Eine Anpassung des Gradienten kann basierend auf der Zuordnungsinformation derart erfolgen, dass bei einem jeweiligen Entleeren eines Probenabschnitts 104 aus einem Probenaufnahmevolumen 180 der Probenabschnitt 104 mit einer solchen Lösungsmittelzusammensetzung beaufschlagt wird, die vor dem zwischenzeitlichen Einfüllen für diesen Probenabschnitt 104 herrschte bzw. programmiert war.

Durch eine Kombination von einem Teil oder allen der oben beschriebenen Merkmale von exemplarischen Ausführungsbeispielen der Erfindung ist es möglich, eine Verarbeitung von nur einem Teil der verfügbaren oder installierten Probenaufnahmevolumina in einem Parkventil in einer zweiten Trenndimension durchzuführen, bevor ein Zurückschalten zu der ersten Trenndimension erfolgt. Entsprechendes gilt für den Fall von kaskadierten Parkventilen.

Gemäß einem exemplarischen Ausführungsbeispiel der Erfindung werden die fluidischen Anschlüsse stromabwärts des "höchsten" (im Sinne des Flusspfads) Schaltpunkts nicht verändert, der das Fluid von der ersten (Einfüll-) zu der zweiten (Entleer-) Dimension führt, nachdem der Fluss an diesen Schaltpunkt geschaltet worden ist und zumindest bis das Fluid in dem schaltbaren Teil des Flusspfads stromabwärts des Schaltpunkts vollständig ersetzt worden ist (Reinigung). Gemäß einem anderen exemplarischen Ausführungsbeispiel ist es möglich, dass die beschriebene Flusspfadänderung nur zwischen irrelevanten Segmenten des Flusspfads erfolgt (zum Beispiel solche Segmente, die keine zu analysierenden Fraktionen enthält, zum Beispiel leer ist).

Gemäß einem exemplarischen Ausführungsbeispiel ist es möglich, dass das Schalten von einem oder mehreren Parkventilen bei angeschlossener zweiter Dimension nur so erfolgt, dass keine Pfadsegmente mit geparkten Proben übersprungen werden. Dies bedeutet, dass sobald ein Flusspfadsegment (Probenschleife, Parkventil einer höheren Stufe in einer Kaskade, etc.), das eine gesammelte Fraktionen enthält, an den Flusspfad der zweiten Dimension angeschlossen wird, es in der zweiten Dimension analysiert wird, anstatt dass es übersprungen wird.

Gemäß einem exemplarischen Ausführungsbeispiel der Erfindung kann die Reihenfolge des Auslesens der Fraktionen aus einem Parkventil oder mehreren Parkventilen durch die beschriebenen Bedingungen definiert werden, insbesondere in Rückwärtsrichtung durchgeführt werden.

Gemäß einem exemplarischen Ausführungsbeispiel kann ein Unterschied zwischen der Parkreihenfolge und tatsächlichen Daten während des Auslesens der Fraktionen korrigiert werden, indem die in der zweiten Dimension erzeugten Datenblöcke umgeordnet werden. Ein solches Umordnen kann während der Laufzeit oder in einem Offline-Modus durchgeführt werden, insbesondere basierend auf einem eindeutigen Nachverfolgen der Fraktionen.

Selbst im Falle eines driftenden Gradienten kann der tatsächliche Analysegradient nach dem Umrechnen des Gradienten der zweiten Dimension korrigiert werden, angepasst auf die Werte der Zusammensetzung, die aktiv waren, während ein Probenabschnitt tatsächlich geparkt wurde.

In dem Fall, dass ein Reinigungszyklus verwendbare Daten ergab, welche ein Eluat erster Dimension repräsentieren, können quantitative Ergebnisse korrigiert (zum Beispiel skaliert, Dreisatz, etc.) werden, dadurch kann das Nettovolumen der Größe eines Probenbereichs (Probenaufnahmevolumen plus Zuleitungen) antizipiert werden.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

## Patentansprüche

1. Verfahren zum Verarbeiten von mittels einer Probenquelle (112) bereitgestellten aufeinanderfolgenden fluidischen Probenabschnitten (104), wobei das Verfahren aufweist:
aufeinanderfolgendes zwischenzeitliches Befüllen von mehr als zwei Probenaufnahmevolumina (180) mit mindestens einem jeweiligen der Probenabschnitte (104); und
aufeinanderfolgendes Entleeren der Probenabschnitte (104) aus den Probenaufnahmevolumina (180) derart, dass vermieden wird, dass zwei jeweilige der Probenabschnitte (104) beim Entleeren miteinander in Kontakt gebracht werden, welche die Probenquelle (112) nicht unmittelbar benachbart verlassen haben,
**gekennzeichnet dadurch, dass** das Entleeren der Probenabschnitte (104) aus den Probenaufnahmevolumina (180) in umgekehrter Reihenfolge zu einer Reihenfolge des Befüllens der Probenaufnahmevolumina (180) mit den Probenabschnitten (104) erfolgt.

2. Verfahren gemäß Anspruch 1, wobei das Befüllen und das Entleeren der Probenaufnahmevolumina (180) mittels Schaltens mindestens eines Fluidventils (110, 200, 202) gesteuert wird.

3. Verfahren gemäß Anspruch 2, wobei zumindest ein Teil der Probenaufnahmevolumina (180) als Fluidleitungsstück zwischen zwei jeweiligen Ports (182) des mindestens einen Fluidventils (110, 200, 202) vorgesehen werden.

4. Verfahren gemäß einem der Ansprüche 1 bis 3, wobei das aufeinanderfolgende Entleeren der Probenabschnitte (104) aus den Probenaufnahmevolumina (180) derart erfolgt, dass vor und/oder während dem Entleeren eine in Fluidverbindung mit zumindest einem Teil der Probenaufnahmevolumina (180) bringbare Zuleitung mit einem Spülfluid gespült wird, insbesondere wobei die Zuleitung mit einem von zu detektierender fluidischer Probe freiem Fluid eines in einem Probenaufnahmevolumen (180) befindlichen Probenabschnitts (104) als Spülfluid gespült wird.

5. Verfahren gemäß einem der Ansprüche 1 bis 4,
wobei das aufeinanderfolgende Entleeren der Probenabschnitte (104) aus den Probenaufnahmevolumina (180) derart erfolgt, dass ein direktes Inkontaktbringen unterschiedlicher Probenabschnitte (104), insbesondere ein direktes Inkontaktbringen in Zu- und/oder Ableitungen der Probenaufnahmevolumina (180) unter Erzeugung einer Probenverschleppung, beim Entleeren verunmöglicht ist,
und/oder
wobei in der Probenquelle (112) eine fluidische Probe in die Probenabschnitte (104) getrennt wird, insbesondere chromatographisch getrennt wird, weiter insbesondere mittels Flüssigchromatographie getrennt wird.

6. Verfahren gemäß einem der Ansprüche 1 bis 5, ferner aufweisend zumindest eines der folgenden Merkmale:
bei dem Verfahren wird ferner ein jeweils entleerter Probenabschnitt (104) in Komponenten getrennt, insbesondere chromatographisch getrennt, weiter insbesondere mittels Flüssigchromatographie getrennt;
bei dem Verfahren wird ferner ein jeweils entleerter Probenabschnitt (104) in einen fluidischen Pfad zwischen eine Fluidfördereinrichtung (126) zum Fördern einer mobilen Phase und eine Probentrenneinrichtung (128) zum Trennen des Probenabschnitts (104) in Komponenten befördert;
in der Probenquelle (112) wird eine erste Trennung einer fluidischen Probe und nach dem Entleeren der Probenabschnitte (104) der fluidischen Probe eine zweite Trennung durchgeführt;
zwei jeweilige der Probenabschnitte (104), welche die Probenquelle (112) unmittelbar benachbart verlassen haben, grenzen an einem fluidischen Auslass der Probenquelle (112) ohne dazwischen angeordnetes Medium unmittelbar physisch aneinander an.

7. Fluidverarbeitungsvorrichtung (114) zum Verarbeiten von mittels einer Probenquelle (112) bereitgestellten aufeinanderfolgenden fluidischen Probenabschnitten (104), wobei die Fluidverarbeitungsvorrichtung (114) aufweist:
mehr als zwei Probenaufnahmevolumina (180), die zum zwischenzeitlichen Befüllen mit mindestens einem jeweiligen der Probenabschnitte (104) eingerichtet sind;
eine Steuereinrichtung (116), die zum derartigen aufeinanderfolgenden Entleeren der Probenabschnitte (104) aus den Probenaufnahmevolumina (180) eingerichtet ist, dass vermieden wird, dass zwei jeweilige der Probenabschnitte (104) beim Entleeren miteinander in Kontakt gebracht werden, welche die Probenquelle (112) nicht unmittelbar benachbart verlassen haben,
**gekennzeichnet dadurch, dass** das Entleeren der Probenabschnitte (104) aus den Probenaufnahmevolumina (180) mittels der Steuereinrichtung (116) in umgekehrter Reihenfolge zu einer Reihenfolge des Befüllens der Probenaufnahmevolumina (180) mit den Probenabschnitten (104) erfolgt.

8. Verfahren gemäß Anspruch 1, wobei das Verfahren ferner aufweist:
Zuordnen von Zuordnungsinformation zu zumindest einem Teil der Probenabschnitte (104), wobei die Zuordnungsinformation indikativ für einen Rang des jeweiligen Probenabschnitts (104) in einer Rangfolge des Befüllens der Probenaufnahmevolumina (180) mit den Probenabschnitten (104) und/oder in einer Rangfolge des Entleerens der Probenabschnitte (104) aus den Probenaufnahmevolumina (180) ist;
Steuern einer Weiterverarbeitung der Probenabschnitte (104) basierend auf der Zuordnungsinformation.

9. Verfahren gemäß Anspruch 8, wobei das Steuern der Weiterverarbeitung der Probenabschnitte (104) ein Steuern eines Trennens von Komponenten der Probenabschnitte (104) aufweist.

10. Verfahren gemäß Anspruch 9, aufweisend zumindest eines der folgenden Merkmale:
das Steuern des Trennens weist ein Einstellen, basierend auf der Zuordnungsinformation, eines Gradienten einer Zusammensetzung einer mobilen Phase auf, die durch eine Probentrenneinrichtung (128) mit daran adsorbierter fluidischer Probe eines jeweiligen Probenabschnitts (104) gefördert wird;
das Steuern des Trennens weist ein Umordnen, basierend auf der Zuordnungsinformation, einer Reihenfolge von den einzelnen Probenabschnitten (104) zugeordneten Detektionssignalen auf.

11. Verfahren gemäß einem der Ansprüche 8 bis 10, wobei die Zuordnungsinformation indikativ für den Rang des jeweiligen Probenabschnitts (104) in der Rangfolge des Befüllens der Probenaufnahmevolumina (180) mit den Probenabschnitten (104) im Verhältnis zu einem Rang des jeweiligen Probenabschnitts (104) in einer Rangfolge des nachfolgenden Entleerens der Probenabschnitte (104) aus den Probenaufnahmevolumina (180) ist.

12. Fluidverarbeitungsvorrichtung gemäß Anspruch 7, wobei die Fluidverarbeitungsvorrichtung (114 ferner aufweist:
eine Zuordnungseinrichtung (184), die zum Zuordnen von Zuordnungsinformation zu zumindest einen Teil der Probenabschnitte (104) eingerichtet ist, wobei die Zuordnungsinformation indikativ für einen Rang des jeweiligen Probenabschnitts (104) in einer Rangfolge des Befüllens der Probenaufnahmevolumina (180) mit den Probenabschnitten (104) und/oder in einer Rangfolge des Entleerens der Probenabschnitte (104) aus den Probenaufnahmevolumina (180) ist;
wobei die Steuereinrichtung (116) zum Steuern einer Weiterverarbeitung der Probenabschnitte (104) basierend auf der Zuordnungsinformation eingerichtet ist.

13. Anordnung (100) zum Verarbeiten einer fluidischen Probe, wobei die Anordnung (100) aufweist:
eine Probenquelle (112) zum Bereitstellen von aufeinanderfolgenden fluidischen Probenabschnitten (104) der fluidischen Probe;
eine Fluidverarbeitungsvorrichtung (114) nach Anspruch 7 oder 12 zum Verarbeiten der mittels der Probenquelle (112) bereitgestellten aufeinanderfolgenden fluidischen Probenabschnitte (104).

14. Anordnung (100) gemäß Anspruch 13, wobei
die Probenquelle (112) als erste Trennstufe zum Trennen der fluidischen Probe in die Probenabschnitte (104) ausgebildet ist, wobei zumindest ein Teil der Probenabschnitte (104) mindestens eine Fraktion der fluidischen Probe aufweist;
die Fluidverarbeitungsvorrichtung (114) als zweite Trennstufe zum Trennen von zumindest einem Teil der Fraktionen der Probenabschnitte (104) in Teilfraktionen ausgebildet ist.

## Claims

1. Method of processing subsequent fluidic sample portions (104) which are provided by a sample source (112), wherein the method comprises:
subsequently intermediately filling more than two sample reception volumes (180) with at least a respective one of the sample portions (104); and
subsequently discharging the sample portions (104) from the sample reception volumes (180), such that it is avoided that respectively two of the sample portions (104) are brought into contact with each other when discharging, which did not leave the sample source (112) in a directly neighboring manner,
**characterized in that**
discharging the sample portions (104) from the sample reception volumes (180) is performed in reversed order with respect to an order of filling the sample reception volumes (180) with the sample portions (104).

2. Method according to claim 1,
wherein filling and discharging the sample reception volumes (180) is controlled by switching at least one fluid valve (110, 200, 202).

3. Method according to claim 2,
wherein at least a part of the sample reception volumes (180) are provided as a fluid conduit piece between two respective ports (182) of the at least one fluid valve (110, 200, 202).

4. Method according to one of the claims 1 to 3,
wherein subsequently discharging the sample portions (104) from the sample reception volumes (180) is performed such that, prior and/or during discharging, a supply conduit, which is bringable in fluid connection with at least a part of the sample reception volumes (180), is rinsed by a rinsing fluid, in particular wherein the supply conduit is rinsed with a fluid, which is free from a fluidic sample to be detected, of a sample portion (104) which is located in a sample reception volume (180) as the rinsing fluid.

5. Method according to one of the claims 1 to 4,
wherein subsequently discharging the sample portions (104) from the sample reception volumes (180) is performed such that bringing into direct contact different sample portions (104), in particular bringing into direct contact in supply conduits and/or drain conduits of the sample reception volumes (180) under generation of a sample carryover during discharging, is made impossible,
and/or
wherein in the sample source (112), a fluidic sample is separated to the sample portions (104), in particular chromatographically separated, further in particular separated by a liquid chromatography.

6. Method according to one of the claims 1 to 5, further comprising at least one of the following features:
in the method, furthermore a respectively discharged sample portion (104) is separated, in particular chromatographically separated, further in particular separated by liquid chromatography, into components;
in the method, furthermore a respectively discharged sample portion (104) is conveyed in a fluidic path between a fluid conveying unit (126) for conveying a mobile phase and a sample separation unit (128) for separating the sample portion (104) into components;
in the sample source (112), a first separation of a fluidic sample, and after discharging the sample portions (104) of the fluidic sample, a second separation is performed;
respectively two of the sample portions (104) which left the sample source (112) in a directly neighboring manner, directly adjoin a fluidic outlet of the sample source (112) without a medium which is arranged in between.

7. Fluid processing device (114) for processing subsequent fluidic sample portions (104) which are provided by a sample source (112), wherein the fluid processing device (114) comprises:
more than two sample reception volumes (180) which are adapted for intermediately filling with at least a respective one of the sample portions (104);
a control unit (116) which is adapted for subsequently discharging the sample portions (104) from the sample reception volumes (180), such that it is avoided, that respectively two of the sample portions (104) are brought into contact with each other during discharging, which did not leave the sample source (112) in a directly neighboring manner,
**characterized in that**
discharging the sample portions (104) from the sample reception volumes (180) by the control unit (116) is performed in reverse order to an order of filling the sample reception volumes (180) with the sample portions (104).

8. Method according to claim 1, wherein the method further comprises:
assigning an assignment information to at least a part of the sample portions (104), wherein the assignment information is indicative for a rank of the respective sample portion (104) in a ranking of filling the sample reception volumes (180) with the sample portions (104) and/or in a ranking of discharging the sample portions (104) from the sample reception volumes (180);
controlling a further processing of the sample portions (104) based on the assignment information.

9. Method according to claim 8,
wherein controlling the further processing of the sample portions (104) comprises controlling a separating of components of the sample portions (104).

10. Method according to claim 9, comprising at least one of the following features:
controlling the separating comprises adjusting, based on the assignment information, a gradient of a composition of a mobile phase which is conveyed through a sample separation unit (128) with fluidic sample of a respective sample portion (104) adsorbed to it;
controlling the separating comprises rearranging, based on the assignment information, an order of detection signals which are assigned to the single sample portions (104).

11. Method according to one of the claims 8 to 10,
wherein the assignment information is indicative for the rank of the respective sample portion (104) in the ranking of filling the sample reception volumes (180) with the sample portions (104) in relation to a rank of the respective sample portion (104) in a ranking of subsequently discharging the sample portions (104) from the sample reception volumes (180).

12. Fluid processing device according to claim 7, wherein the fluid processing device (114) further comprises:
an assignment unit (184) which is adapted for assigning an assignment information to at least a part of the sample portions (104), wherein the assignment information is indicative for a rank of the respective sample portion (104) in a ranking of filling the sample reception volumes (180) with the sample portions (104) and/or in a ranking of discharging the sample portions (104) from the sample reception volumes (180);
wherein the control unit (116) is adapted for controlling a further processing of the sample portions (104) based on the assignment information.

13. Arrangement (100) for processing a fluidic sample, wherein the arrangement (100) comprises:
a sample source (112) for providing subsequent fluidic sample portions (104) of the fluidic sample;
a fluid processing device (114) according to claim 7 or 12 for processing the subsequent fluidic sample portions (104) which are provided by the sample source (112).

14. Arrangement (100) according to claim 13, wherein
the sample source (112) is adapted as a first separation stage for separating the fluidic sample into the sample portions (104), wherein at least a part of the sample portions (104) comprises at least a fraction of the fluidic sample;
the fluid processing device (114) is adapted as a second separation stage for separating at least a part of the fractions of the sample portions (104) into partial fractions.

## Revendications

1. Procédé de traitement de portions d'échantillon (104) fluidiques successives fournies grâce à une source d'échantillons (112), dans lequel le procédé comprend les étapes consistant à :
remplir, de manière successive et au cours d'un intervalle, plus de deux volumes de réception d'échantillon (180) avec au moins une portion d'échantillon respective parmi les portions d'échantillon (104) ; et
vider successivement les portions d'échantillon (104) des volumes de réception d'échantillon (180) de telle manière que deux portions respectives, parmi les portions d'échantillon (104), qui ont quitté la source d'échantillons (112) de manière non directement adjacente ne puissent venir en contact l'une avec l'autre lors du vidage,
**caractérisé en ce que**
le vidage des portions d'échantillon (104) des volumes de réception d'échantillon (180) s'effectue dans l'ordre inverse de l'ordre de remplissage des volumes de réception d'échantillon (180) avec les portions d'échantillon (104).

2. Procédé selon la revendication 1, dans lequel le remplissage et le vidage des volumes de réception d'échantillon (180) sont commandés grâce à la commutation d'au moins une valve pour fluide (110, 200, 202).

3. Procédé selon la revendication 2, dans lequel au moins une partie des volumes de réception d'échantillon (180) est fournie sous forme d'élément de conduite de fluide entre deux ports (182) respectifs de la au moins une valve pour fluide (110, 200, 202).

4. Procédé selon l'une quelconque des revendications 1 à 3, dans lequel le vidage successif des portions d'échantillon (104) des volumes de réception d'échantillon (180) s'effectue de telle manière qu'une conduite d'amenée pouvant être placée en liaison fluidique avec au moins une partie des volumes de réception d'échantillon (180) est rincée avec un fluide de rinçage avant et/ou pendant le vidage, en particulier dans lequel la conduite d'amenée est rincée avec un fluide exempt d'échantillon fluidique à détecter, faisant office de fluide de rinçage, d'une portion d'échantillon (104) se trouvant dans un volume de réception d'échantillon (180).

5. Procédé selon l'une quelconque des revendications 1 à 4, dans lequel le vidage successif des portions d'échantillon (104) des volumes de réception d'échantillon (180) s'effectue de telle manière qu'une mise en contact directe de différentes portions d'échantillon (104), en particulier une mise en contact directe au sein de conduites d'amenée et/ou de sortie des volumes de réception d'échantillon (180) avec production d'un déport d'échantillon, est rendue impossible lors du vidage,
et/ou
dans lequel un échantillon fluidique est séparé en portions d'échantillon (104) au sein de la source d'échantillons (112), en particulier est séparé par chromatographie, et de manière plus particulière est séparé par chromatographie liquide.

6. Procédé selon l'une quelconque des revendications 1 à 5, comprenant en outre au moins une des caractéristiques ci-dessous :
au cours du procédé, une portion d'échantillon (104) respectivement vidée est en outre séparée en composants, en particulier est séparée par chromatographie, et de manière plus particulière est séparée par chromatographie liquide ;
au cours du procédé, une portion d'échantillon (104) respectivement vidée est en outre transportée sur un trajet fluidique entre un dispositif de transport de fluide (126) permettant de transporter une phase mobile et un dispositif de séparation d'échantillon (128) permettant de séparer la portion d'échantillon (104) en composants ;
une première séparation d'un échantillon fluidique est effectuée au sein de la source d'échantillons (112) et une seconde séparation est effectuée après le vidage des portions d'échantillon (104) de l'échantillon fluidique ;
deux portions d'échantillon respectives, parmi les portions d'échantillon (104), qui ont quitté la source d'échantillons (112) de manière immédiatement adjacente sont directement contiguës physiquement l'une à l'autre, sans milieu intermédiaire, au niveau d'une sortie fluidique de la source d'échantillons (112).

7. Dispositif de traitement de fluide (114) permettant de traiter des portions d'échantillon (104) fluidiques successives fournies grâce à une source d'échantillons (112), dans lequel le dispositif de traitement de fluide (114) comprend :
plus de deux volumes de réception d'échantillon (180) conçus pour être remplis au cours d'un intervalle avec au moins une portion d'échantillon respective parmi les portions d'échantillon (104) ;
un dispositif de commande (116) conçu pour vider successivement les portions d'échantillon (104) à partir des volumes de réception d'échantillon (180) de manière à éviter que deux portions d'échantillon respectives, parmi les portions d'échantillon (104), qui n'ont pas quitté la source d'échantillons (112) de manière immédiatement adjacente ne soient mises en contact l'une avec l'autre lors du vidage,
**caractérisé en ce que**
le vidage des portions d'échantillon (104) des volumes de réception d'échantillon (180) s'effectue grâce au dispositif de commande (116) dans l'ordre inverse de l'ordre de remplissage des volumes de réception d'échantillon (180) avec les portions d'échantillon (104).

8. Procédé selon la revendication 1, dans lequel le procédé comprend en outre les étapes consistant à :
associer des informations d'association à au moins une partie des portions d'échantillon (104), dans lequel les informations d'association sont indicatives d'un rang de la portion d'échantillon (104) respective au sein d'une priorité de remplissage des volumes de réception d'échantillon (180) avec les portions d'échantillon (104) et/ou au sein d'une priorité de vidage des portions d'échantillon (104) des volumes de réception d'échantillon (180) ;
commander une poursuite du traitement des portions d'échantillon (104) en se basant sur les informations d'association.

9. Procédé selon la revendication 8, dans lequel l'étape de commande de la poursuite du traitement des portions d'échantillon (104) comprend une étape de commande de la séparation des composants des portions d'échantillon (104).

10. Procédé selon la revendication 9, présentant au moins une des caractéristiques ci-dessous :
l'étape de commande de la séparation comprend une étape consistant à ajuster, en se basant sur les informations d'association, un gradient d'une composition d'une phase mobile qui est transportée avec un échantillon fluidique, adsorbé sur ladite composition, d'une portion d'échantillon (104) respective, grâce à un dispositif de séparation d'échantillons (128) ;
l'étape de commande de la séparation présente une étape consistant à réarranger, en se basant sur les informations d'association, un ordre des signaux de détection associés aux différentes portions d'échantillon (104).

11. Procédé selon l'une quelconque des revendications 8 à 10, dans lequel les informations d'association sont indicatives du rang de la portion d'échantillon (104) respective au sein de la priorité de remplissage des volumes de réception d'échantillon (180) avec les portions d'échantillon (104) par rapport à un rang de la portion d'échantillon (104) respective au sein d'une priorité de vidage ultérieure des portions d'échantillon (104) des volumes de réception d'échantillon (180).

12. Dispositif de traitement de fluide selon la revendication 7, dans lequel le dispositif de traitement de fluide (114) comprend en outre :
un dispositif d'association (184) conçu pour associer des informations d'association à au moins une partie des portions d'échantillon (104), dans lequel les informations d'association sont indicatives du rang de la portion d'échantillon (104) respective au sein d'une priorité de remplissage des volumes de réception d'échantillon (180) avec les portions d'échantillon (104) et/ou au sein d'une priorité de vidage des portions d'échantillon (104) des volumes de réception d'échantillon (180) ;
dans lequel le dispositif de commande (116) est conçu pour commander une poursuite de traitement des portions d'échantillon (104) en se basant sur les informations d'association.

13. Agencement (100) permettant de traiter un échantillon fluidique, dans lequel l'agencement (100) comprend :
une source d'échantillons (112) permettant de fournir des portions d'échantillon (104) fluidiques successives de l'échantillon fluidique ;
un dispositif de traitement de fluide (114) selon la revendication 7 ou 12, permettant de traiter les portions d'échantillon (104) fluidiques successives fournies grâce à la source d'échantillon (112).

14. Agencement (100) selon la revendication 13, dans lequel
la source d'échantillon (112) est réalisée sous la forme d'un premier étage de séparation permettant de séparer l'échantillon fluidique au sein des portions d'échantillon (104), dans lequel au moins une partie des portions d'échantillon (104) présente au moins une fraction de l'échantillon fluidique ;
le dispositif de traitement de fluide (114) est conçu sous la forme d'un deuxième étage de séparation permettant de séparer au moins une partie des fractions des portions d'échantillon (104) en sous-fractions.
